# EUROPEAN PATENT SPECIFICATION

(11) **EP 4 007 125 B1**
(45) Date of publication and mention of the grant of the patent: **29.04.2026**
(21) Application number: 19946787.9
(22) Date of filing: 27.12.2019
(51) Int. Cl.: H02K 1/27, H02K 21/16, H02K 29/03, H02K 15/12

(54) **ELECTRIC MOTOR AND HOUSEHOLD ELECTRICAL APPLIANCE**
ELEKTROMOTOR UND ELEKTRISCHES HAUSHALTSGERÄT
MOTEUR ÉLECTRIQUE ET APPAREIL ÉLECTROMÉNAGER

(30) Priority: 26.09.2019 CN 201910919342
(43) Date of publication of application: 01.06.2022
(73) Proprietor: Guangdong Welling Motor Manufacturing Co., Ltd., Foshan, Guangdong 528311 (CN)
(72) Inventor: LI, Wenrui, Foshan, Guangdong 528311 (CN); YU, Minghu, Foshan, Guangdong 528311 (CN); LI, Hu, Foshan, Guangdong 528311 (CN)
(74) Representative: Whitlock, Holly Elizabeth Ann
(86) International application number: PCT/CN2019/129350
(87) International publication number: WO 2021/056902

(56) References cited:
- EP-A1- 3 404 804
- CN-A- 108 718 124
- CN-A- 108 923 553
- CN-A- 109 245 394
- CN-A- 110 277 847
- CN-U- 207 184 192
- CN-U- 207 184 192
- CN-U- 207 368 769
- CN-Y- 201 398 140
- JP-A- 2006 158 008
- US-A1- 2016 329 760
- US-A1- 2019 097 481

## Description

### TECHNICAL FIELD

The present application relates to the field of motor technology, in particular, to a motor and household appliances.

### BACKGROUND

The statements herein merely provide background information related to the present application and do not necessarily constitute prior art. Because of its simple structure and reliable operation, brushless DC motors are used more and more in various household appliances. However, in the related art, the motor has low power density and high vibration noise, which no longer meets the needs of current household appliances. It is necessary to seek a motor with high power density and low vibration noise. While improving the motor noise, it is also necessary to consider the efficiency and cost of the motor, so it is necessary to seek a balance between vibration noise, efficiency and cost. CN108923553A relates generally to a magnet motor in which a partitioned support bridge and a partitioned wide magnetic bridge are applied. US2019097481A1 relates generally to a brushless DC motor, wherein a relationship of an axial length Lr of the rotor core, an axial length Lm of each of the permanent magnets, and an axial length Ls of the stator core is Lm>Lr≥Ls. EP3404804A1 relates generally to an electric drive motor, in which the stator and the permanent magnet rotor each have a plurality of mutually equidistant latching positions on their surfaces facing the air gap. US2016329760A1 relates generally to a motor which includes a groove-defining portion that defines an axially extending groove receding radially outwardly from the radially inner surface of the shell. CN108718124A relates generally to a rotor core in which a multilayer structure is formed by installing different inner magnetic bridges, thereby reducing magnetic flux leakage.

### SUMMARY

Aspects of the invention are set out in the claims. One purpose of the embodiments of the present application is to provide a motor and a household appliance, aiming at solving the problems of low power density and large vibration and noise.

The technical scheme adopted in the embodiment of the present application is:
In the first aspect, a motor is provided, including a rotor iron core and a stator iron core. The rotor iron core includes a collar portion and a plurality of sector-shaped portions surrounding the collar portion and arranged at intervals, and an accommodating groove formed between two adjacent sector-shaped portions. A stator iron core sleeved on the rotor iron core, including a plurality of stator units enclosed in a ring shape. a pole slot factor of the motor is an absolute value of the difference between a number of the stator units and a number of the sector-shaped portions, and a P-S coefficient of the motor is a sum of a reciprocal of the pole slot factor and a reciprocal of a positive adjacent natural number of pole slot factor; the P-S coefficient ranges from 0.4 to 0.5 and 0.8 to 1; a number of slots per pole and phase of the motor is greater than or equal to 0.35 and less than or equal to 0.5.

In a second aspect, a household appliance including the above motor is provided.

The beneficial effects of the motor and the household appliance provided by the embodiments of the present application are that the vibration and noise of the motor can be reduced, the power density and efficiency of the motor can be high, and the cost of the motor can be effectively reduced.

### BRIEF DESCRIPTION OF DRAWINGS

In order to illustrate the technical solutions in the embodiments of the present application more clearly, the following briefly introduces the accompanying drawings that are used in the description of the embodiments or exemplary technologies. Obviously, the drawings in the following description are only for the present application. In some embodiments, for those of ordinary skill in the art, other drawings can also be obtained according to these drawings without any creative effort.
FIG. 1 is a schematic cross-sectional view of an embodiment of a motor provided by the present application along the axis perpendicular to the axial direction;
FIG. 2 is a schematic cross-sectional view of the motor shown in FIG. 1 along the axial direction;
FIG. 3 is a schematic diagram of the motor efficiency as a function of the number of poles, the number of slots shown in FIG. 1;
FIG. 4 is a schematic diagram of the P-S coefficient as a function of the motor efficiency of the motor shown in FIG. 1;
FIG. 5 is a schematic diagram of the P-S coefficient of the motor shown in FIG. 1 as a function of the percentage of the electromagnetic vibration amplitude of the motor;
FIG. 6 is a partially enlarged schematic diagram for showing the size of the air gap in the motor shown in FIG. 1;
FIG. 7 is a schematic diagram of the sector-shaped portion in the rotor iron core shown in FIG. 6;
FIG. 8 is a schematic diagram showing the motor efficiency as a function of the outer diameter of the rotor iron core to shown in Fig. 1 at different air gap of the motor;
FIG. 9 is a schematic diagram of the efficiency of the motor and the magnetic field distortion rate of the motor as a function of the maximum air gap of the motor shown in FIG. 1;
FIG. 10 is a schematic diagram showing the motor efficiency as a function of the outer diameter of the rotor iron core and the axial length of each of the plurality of magnets on the shown in Fig. 1;
FIG. 11 is a three-dimensional schematic diagram of the rotor in the motor shown in Fig. 1;
FIG. 12 is a schematic cross-sectional view perpendicular to the axial direction of a specific embodiment of the rotor shown in FIG. 11;
FIG. 13 is a schematic front view of the end surface of the rotor shown in FIG. 12;
FIG. 14 is a schematic cross-sectional view perpendicular to the axial direction of another specific embodiment of the rotor shown in FIG. 11;
FIG. 15 is a schematic cross-sectional view perpendicular to the axial direction of another specific embodiment of the rotor shown in FIG. 11;
FIG. 16 is an enlarged schematic view of the A region shown in FIG. 15;
FIG. 17 is a schematic front view of the end surface of the rotor shown in FIG. 14 or FIG. 15;
FIG. 18 is a schematic cross-sectional view of the rotor shown in FIG. 11 along one side in the axial direction;
FIG. 19 is a schematic diagram of the rotor shaft in the rotor shown in FIG. 18;
FIG. 20 is a schematic diagram of the exploded structure of the rotor iron core in the motor shown in FIG. 1;
FIG. 21 is a schematic diagram of the first rotor punching plate in the rotor iron core shown in FIG. 20;
FIG. 22 is a schematic diagram of the second rotor punching plate in the rotor iron core shown in FIG. 20;
FIG. 23 is a schematic diagram of dimensioning in the rotor iron core shown in FIG. 22;
FIG. 24 is a schematic diagram of local flux leakage distribution in the motor shown in FIG. 1;
FIG. 25 is a schematic cross-sectional diagram of the stator in the motor shown in FIG. 1 along the axis perpendicular to the axial direction;
FIG. 26 is a schematic diagram of the stator iron core in the motor shown in Fig. 1;
FIG. 27 is a schematic diagram of a specific embodiment of the stator unit in the stator iron core shown in FIG. 26;
FIG. 28 is a schematic diagram of another specific embodiment of the stator unit in the stator iron core of FIG. 26.

### DETAILED DESCRIPTION

In order to make the purpose, technical solutions and advantages of the present application more clearly understood, the present application will be described in further detail below with reference to the accompanying drawings and embodiments. It should be understood that the specific embodiments described herein are only used to explain the present invention, but not to limit the present application.

If there are descriptions involving "first", "second", etc. in the embodiments of the present application, the descriptions of "first", "second", etc. are only used for the purpose of description, and should not be construed as indicating or implying their relative importance or implicitly indicates the number of technical features indicated. Thus, a feature limited with "first", "second" may expressly or implicitly include at least one of that features. In addition, the technical solutions between the various embodiments can be combined with each other, but must be based on the realization by those of ordinary skill in the art. When the combination of technical solutions is contradictory or cannot be realized, it should be considered that the combination of such technical solutions does not exist and is not within the protection scope required by the present application.

Reference to an "embodiment" means that a particular feature, structure, or characteristic described in combination with the embodiment can be included in at least one embodiment of the present application. The appearances of such phrase in various places in the specification are not necessarily all referring to the same embodiment, nor a separate or alternative embodiment that is mutually exclusive of other embodiments. It is explicitly and implicitly understood by those skilled in the art that the embodiments described herein may be combined with other embodiments.

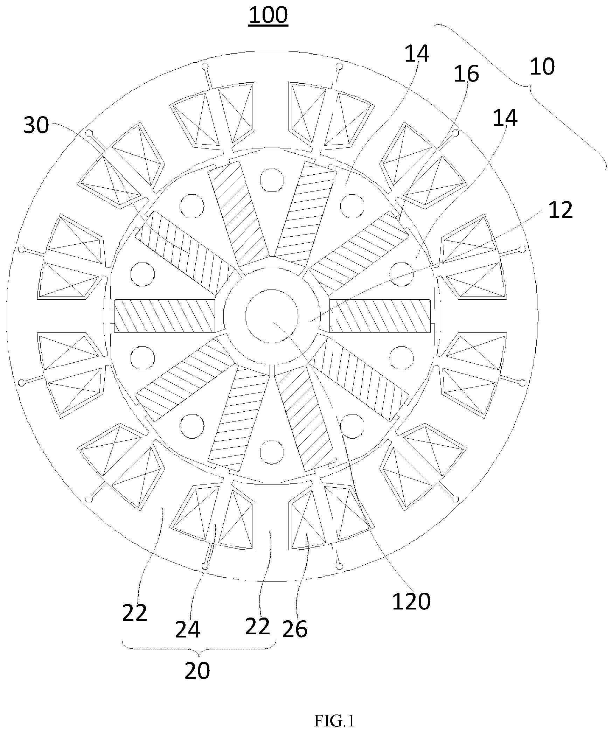

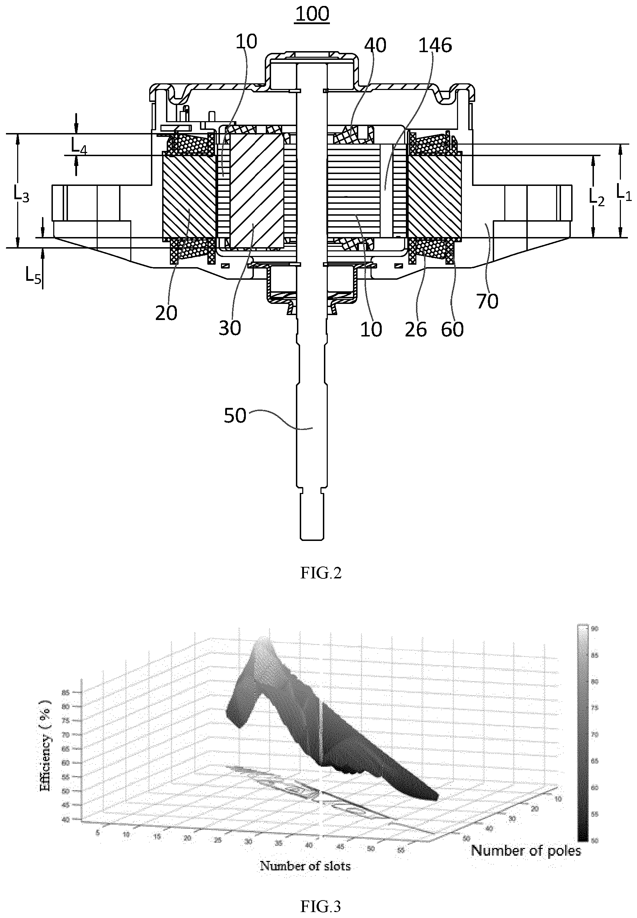

Referring to FIG. 1 and FIG. 2, FIG. 1 is a schematic cross-sectional view of an embodiment of a motor provided by the present application along the axis perpendicular to the axial direction, FIG. 2 is a schematic cross-sectional view of the motor shown in FIG. 1 along the axial direction.

In this embodiment, the motor 100 includes a rotor and a stator. The rotor includes a rotor iron core 10, a plurality of magnets 30, an overmold 40 and a rotor shaft 50, wherein a plurality of magnet 30 are embedded on the rotor iron core 10, and the overmold 40 is covered on the rotor iron core 10, so that the rotor iron core 10 and the plurality of magnets 30 are combined to form a rotor, and the rotor shaft 50 is connected to the rotor iron core 10. The shaft hole 120 on the rotor iron core 10 is assembled to output power through the rotor shaft 50.

The stator is wound around the outer periphery of the rotor, and includes a stator iron core 20, a winding 26, a bobbin 60 and a plastic package 70. The winding 26 is wound on the stator iron core 20, and the winding 26 generates an alternating magnetic field when being powered on, thereby driving the rotor to rotate. The bobbin 60 covers the inner surface of the stator slot 24 on the stator iron core 20 to isolate the winding 26. The plastic package 70 is wrapped on the stator iron core 20 to encapsulate the stator iron core 20, the winding 26 and the bobbin 60, so as to prevent impurities and the like from entering the stator iron core 20.

In one embodiment, referring to FIG. 1 and FIG. 2, the rotor iron core 10 specifically includes a collar portion 12 and a plurality of sector-shaped portions 14 surrounding the collar portion 12 and arranged at intervals, and an accommodating groove 16 is formed between two adjacent sector-shaped portions 14, so that a plurality of accommodating grooves 16 are formed at intervals along the circumferential direction of the collar portion 12 on the rotor iron core 10. Each accommodating groove 16 is provided with a magnet 30. The shaft hole 120 is provided on the collar portion 12, and the rotor shaft 50 is assembled with the shaft hole 120, such as interference fit or gap fit.

When the magnet 30 is embedded in the accommodating groove 16, the N pole and the S pole of the magnet 30 are respectively attached to the side surfaces of the two adjacent sector-shaped portions 14, and the opposite surfaces on the adjacent magnet 30 have the same polarity, that is, the same S pole or N pole. Therefore, the sector-shaped portions 14 sandwiched by the adjacent two magnets 30 exhibit S or N magnetic polarity correspondingly, while the adjacent two sector-shaped portions 14 exhibit opposite magnetic polarities.

In this embodiment, the rotor iron core 10 includes an even number of sector-shaped portions 14, and the even number of sector-shaped portions 14 alternately exhibit opposite magnetic polarities of S and N poles in turn in the circumferential direction, and form a closed magnetic circuit. In addition, in order to uniformly distribute the magnetic circuits, the plurality of accommodating grooves 16 are uniformly distributed along the circumferential direction of the collar portion 12.

The magnet 30 is, for example, a ferrite-based sintered magnet, a neodymium magnet, or the like. In this embodiment, the magnet 30 has a cuboid structure, and the magnet 30 is arranged in the accommodating groove 16 and penetrates the rotor iron core 10 along the axial direction of the rotor iron core 10. In other embodiments, the magnet 30 may also be a structure such as a trapezoid, which is not limited in this application.

The overmold 40 is a resin material and is formed on the rotor iron core10 and the magnet 30 by injection molding. The overmold 40 is further filled in the gap between the magnet 30 and the rotor iron core 10.

In one embodiment, referring to FIGS. 1 and 2, the stator iron core 20 includes a plurality of stator units 22 enclosed in a ring shape, and each stator unit 22 is provided with a winding 26. Stator slots 24 are formed between adjacent stator units 22, and the windings 26 are wound on the corresponding stator units 22 and arranged in the stator slots 24. The winding 26 is a three-phase winding, and the windings of each phase are wound on the stator unit 22 at intervals in turn, and the alternating magnetic field is generated by sequentially energizing the windings of each phase according to a rule.

In order to improve the efficiency of the motor 100, the present application provides an embodiment for optimizing the motor from the perspective of the number of stator slots and the number of rotor poles of the motor 100.

Specifically, in this embodiment, the pole slot factors of the motor 100 are defined as the absolute value of the difference between the number of stator units 22 and the number of sector-shaped portions 14, and the P-S coefficient k_{P-S} of the motor 100 is t a sum of a reciprocal of the pole slot factor and a reciprocal of a positive adjacent natural number of pole slot factor, and the P-S coefficient k_{P-S} is limited in the range of 0.4 to 0.5 and 0.8 to 1, the range includes the endpoint values 0.4, 0.5, 0.8 and 1, and the number of slots per pole and phase of motor 100 is limited to be greater than or equal to 0.35 and less than or equal to 0.5. The number of slots per pole and phase is the ratio of the number of slots to the product of the number of poles multiplied by the number of phases.

For example, if the number of stator units 22 is z, then the number of stator slots is z, the number of sector-shaped portions14 is 2p, then the number of rotor poles is 2p, pole slot factor s=|z-2p|, P-S coefficient k_{P-S}=[s+(s +1)]/[s×(s+1)], the expression for the number of slots per pole and phase is: z/(2p×3).

The improved effect of the above limitation on motor efficiency will be discussed in detail below.

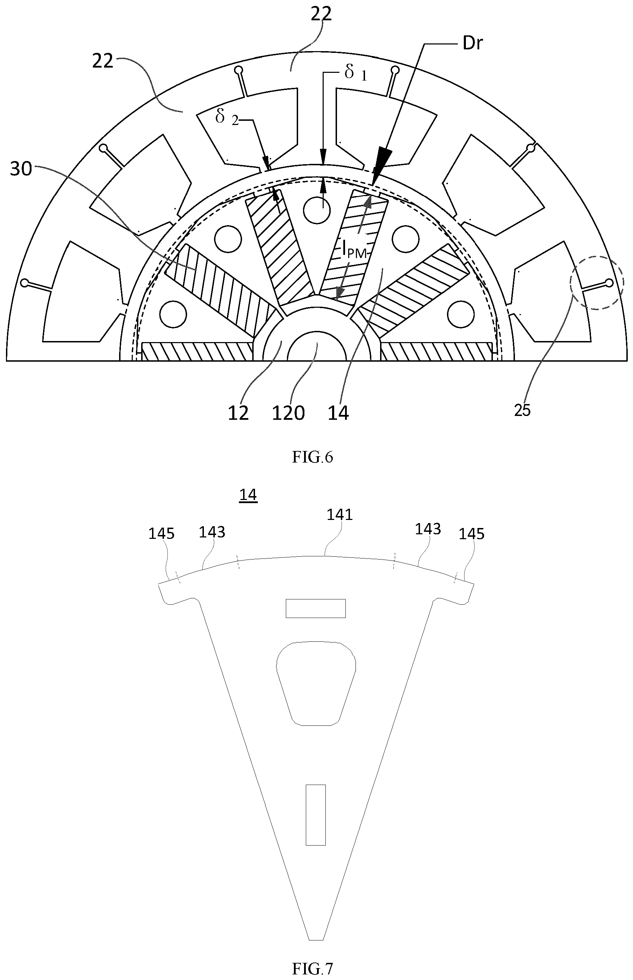

First of all, from the perspective of the stator, as shown in FIG. 6, it can be seen from electromagnetic analysis that since there is an additional air gap 25 between the stator units 22, the greater the number of stator slots z, the more air gaps 25 , and the greater the reluctance of stator iron core 20 to the magnetic circuit. In order to maintain the optimum motor performance, it is necessary to relatively thicken the windings of the winding 26, increase the number of windings on the stator unit 22, or increase the overall length of the windings, so as to generate a larger magnetic field strength to overcome the increased magnetic field resistance.

On the contrary, when the number of stator slots z is relatively small, the magnetic flux on the stator is also less, and the magnetic flux on the stator is in an undersaturated state, which reduces the efficiency of the motor 100 and the power density of the motor 100.

Further from the perspective of the rotor, taking the built-in motor with tangential magnetization as an example, when the number of rotor poles is relatively small, the number of magnet 30 is also small, and the magnetic flux on the rotor is low, so it passes between the rotor and the stator. The magnetic flux involved in the electromechanical energy conversion of the air gap is also lower, and the power density of the motor 100 is also lower. At this time, in order to maintain the optimal motor performance, the radial dimension of the magnet 30 needs to be relatively increased to increase the magnetic flux on the rotor, and the radial dimension of the rotor iron core 10 will also increase, so the cost of the motor 100 will increase.

On the contrary, when the number of rotor poles 2p of the motor 100 is relatively large, the number of magnets 30 is relatively large, and the magnetic flux on the rotor is in a supersaturated state, which increases the iron loss of the motor 100. Under the condition that the rotation speed remains unchanged, the frequency of the three-phase electricity required for the operation of the motor 100 with a relatively large number of poles 2p will increase, which will further increase the iron loss of the motor 100, resulting in a decrease in the efficiency of the motor 100 and an increase in the cost of the motor 100.

Therefore, the number of poles 2p and the number of slots z have a great impact on the efficiency, performance and cost of the motor 100. At the same time, it is also found in the study that the number of poles 2p and the number of slots z also have a great impact on the electromagnetic vibration amplitude of the motor 100.

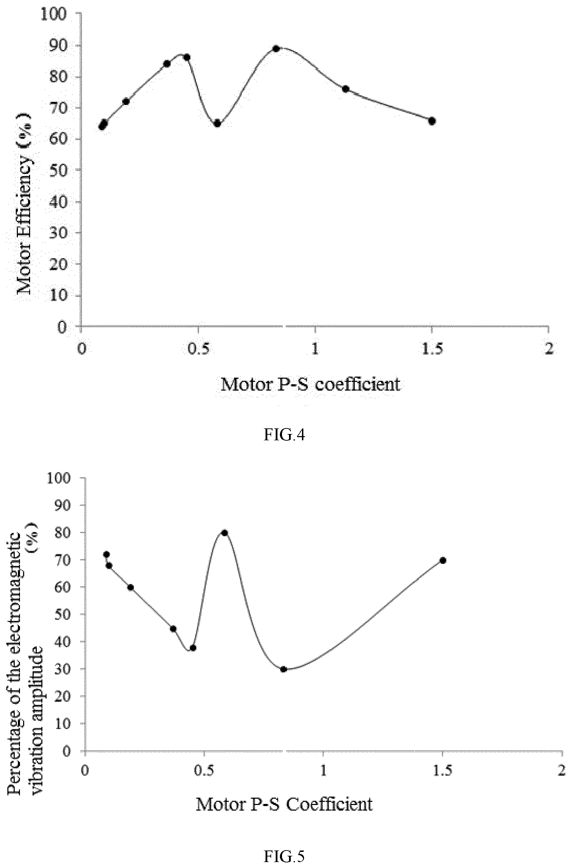

In order to obtain the optimal combination of the number of poles 2p and the number of slots z, the present application conducts a large number of experimental verification and analysis on the motor 100, thereby obtaining the curve data shown in FIG. 3, FIG. 4 and FIG. 5, and by comparing the above curve data to the number of poles 2p and slot number z are optimized. Specifically, FIG. 3 is a schematic diagram of the efficiency of the motor 100 as a function of the number of poles 2p, the number of slots z , FIG. 4 is a schematic diagram of the motor efficiency as a function of the P-S coefficient of the motor k_{P-S} and, and FIG. 5 is a schematic diagram of a percentage of electromagnetic vibration amplitude as a function of the P-S coefficient of the motor k_{P-S}.

As shown in FIG. 3, the efficiency of motor 100 first increases and then decreases with the increase of the number of slots z, and the efficiency of motor 100 also increases first and then decreases with the increase of the number of poles 2p. The number 2p is not conducive to maximizing the efficiency of the motor 100, and the peak efficiency of the motor 100 occurs in the range of the slot number z from 5 to 15 and the pole number 2p from 0 to 20.

In one embodiment, as shown in FIG. 4 and FIG. 5, FIG. 4 and FIG. 5 are drawn on the premise that the number of slots per pole per phase is greater than or equal to 0.35 and less than or equal to 0.5. Specifically, the higher the motor efficiency and the lower the electromagnetic vibration effect of the motor, the better the performance of the motor. In FIG. 4, the motor efficiency forms two peaks with the increase of the P-S coefficient of the motor k_{P-S}, and it can be concluded from FIG. 4 that the local peak of the motor efficiency appears when the P-S coefficient of the motor k_{P-S} is between 0.4 and 0.5 and 0.8 and 1 within the segment. In FIG. 5, the percentage of electromagnetic vibration amplitude appears two valleys with the increase of the P-S coefficient of the motor k_{P-S}, and it can be concluded from FIG. 5 that the local trough value of the percentage of electromagnetic vibration amplitude appears when the P-S coefficient of the motor k_{P-S} is 0.4 to 0.5 and within the range between 0.8 and 1.

Therefore, considering factors such as motor efficiency, electromagnetic vibration amplitude percentage, and motor cost, this application selects two ranges of P-S coefficient k_{P-S} greater than or equal to 0.4 and less than or equal to 0.5 or greater than or equal to 0.8 and less than or equal to 1. The number of slots is greater than or equal to 0.35 and less than or equal to 0.5. This design can ensure that the harmonic components of the tangential electromagnetic force wave of the motor 100 are low, that is, the vibration and noise of the motor 100 are low, and at the same time, the power density is high at the same cost, and the motor efficiency is good, costs are also effectively reduced.

For example, if the motor 100 is a three-phase motor with 10 poles and 12 slots, its P-S coefficient k_{P-S} is 0.83, the number of slots per pole and phase is 12/(10×3)=0.4, the motor efficiency is 0.89, and the percentage of electromagnetic vibration amplitude is 30%. The motor 100 is a three-phase motor with 8 poles and 12 slots, then its P-S coefficient k_{P-S} is 0.45, the number of slots per pole and each phase is 12/(8×3)=0.5, the motor efficiency is 0.86, and the percentage of electromagnetic vibration amplitude is 38%. The above motor efficiency and electromagnetic vibration amplitude percentage are greatly improved compared to existing products.

In one embodiment, referring to FIG. 6, in order to improve the efficiency of the motor 100 and reduce the vibration and noise of the motor, the present application also provides an optimization method for the motor 100 from the perspective of the air gap between the stator and the rotor of the motor 100 and the outer diameter of the rotor. implementation.

As shown in FIG. 6, in this embodiment, the design of the uneven air gap is adopted between the stator iron core 20 and the rotor iron core 10, and the uneven air gap changes periodically along the outer circumference of the rotor iron core 10. Specifically, an uneven air gap is formed between each sector-shaped portion 14 and the stator teeth 24, so the uneven air gap between the stator iron core 20 and the rotor iron core 10 changes periodically along the outer circumference of the rotor iron core 10.

In one embodiment, due to the formation of an uneven air gap between the rotor iron core 10 and the stator iron core 20, the radial distance between the outer peripheral side of the rotor iron core 10 and the inner peripheral side of the stator iron core 20 is also uneven, and this The unevenness of the radial spacing also changes periodically along the outer circumference of the rotor iron core 10.

Specifically, the size of the air gap between any part of the stator unit 22 and the sector-shaped portion 14 may increase first and then decrease with the rotation of the rotor iron core 10 repeatedly, or may also decrease first and then increase with the rotation of the rotor iron core 10 repeatedly.

In one embodiment, referring to FIG. 6 and FIG. 7, in this embodiment, the collar portion 12 has a shaft hole 120, and the outer edges of the sector-shaped portion 14 include a first arc segment 141 concentric with the shaft hole 120 and respectively connected to the two second arc segments 143 at both ends of the first arc segment 141, wherein the second arc segments 143 and the first arc segments 141 are not concentric. That is, the second arc segments 143 are not concentric with the shaft hole 120, but are eccentric relative to the shaft hole 120. Usually, the rotor and the stator are arranged concentrically, so that an even air gap can be formed between the second arc segments 143 on both sides and the stator teeth 24. The air gap between the second arc segments 143 and the stator unit 22 is gradually increased or gradually decreased, so as to reduce the harmonic ratio of the back EMF of the motor 100 and improve the efficiency of the motor.

The radial air gap between the first arc segment 141 and the stator unit 22 constitutes the minimum air gap δ₁ of the uneven air gap.

The outer edge of the sector-shaped portion 14 further includes two straight line segments 145 respectively connected to the two second arc segments 143. The straight line segments 145 are arranged at the outer end of the outer contour of the sector-shaped portion 14, so when the rotor iron core 10 is plastic-sealed, part of the plastic at the accommodating groove 16 can flow to the arc surface of the outer contour of the rotor iron core 10 through the straight line segments 145, so that the rotor iron core 10 can better prevent flashing, that is, to prevent the plastic from protruding out of the second arc segments 143, thereby avoiding friction between the rotor and the stator.

Optionally, the outline of the inner peripheral surface of the stator iron core 20 is a regular circular inner surface, and the outline of the outer peripheral surface of the rotor iron core 10 is an irregular circular outer surface, so that an uneven air is formed between the rotor iron core 10 and the stator iron core 20.

Optionally, the contour of the inner peripheral surface of the stator iron core 20 and the contour of the outer peripheral surface of the rotor iron core 10 are both irregular circular surfaces, and an uneven air gap may also be formed between the rotor iron core 10 and the stator iron core 20.

The uneven air gap is optimized from the minimum air gap and the ratio of the minimum air gap to the maximum air gap, so that the uneven air gap can improve the efficiency of the motor 100 and reduce the vibration and noise of the motor 100.

According to the electromagnetic principle of the motor, the size of the air gap δ along the radial direction and the side area of the rotor determine the magnetic field distribution and the magnetic flux conversion efficiency between the rotor and the stator. The smaller the radial dimension of the air gap δ and the larger the outer diameter D of the rotor iron core 10, the smaller the corresponding air gap magnetic resistance. The larger the radial dimension of the air gap δ and the smaller the outer diameter D, the larger the corresponding air gap reluctance. Excessive air-gap reluctance will lead to the weakening of the magnetic field in the air-gap δ, which in turn will reduce the magnetic flux involved in electromechanical energy conversion and reduce motor efficiency, while too small air-gap reluctance will cause the rotor and stator to be easily magnetically saturated. This leads to an increase in iron loss and a decrease in motor efficiency. Therefore, a reasonable ratio of the air gap δ to the outer diameter D of the rotor iron core 10 is the key factor to improve the motor efficiency.

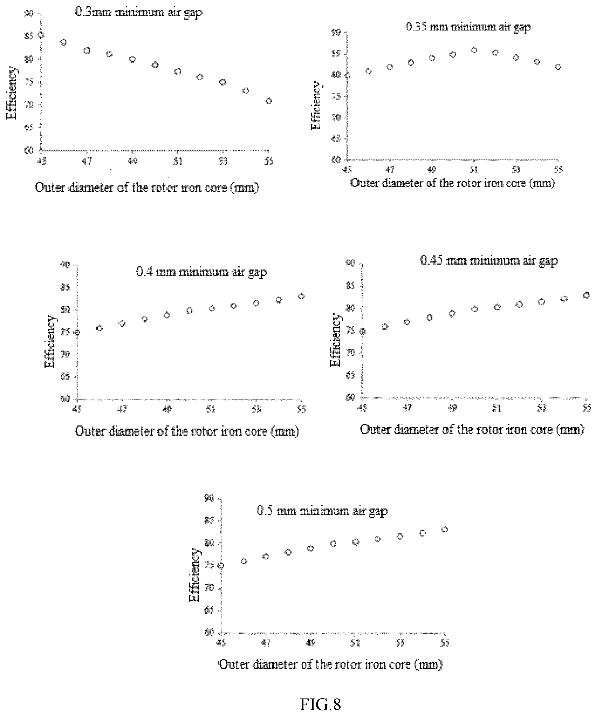

Referring to FIG. 8, FIG. 8 is a schematic diagram illustrating the motor efficiency as a function of the air gap of the motor and the outer diameter of the rotor. Here, the air gap δ corresponds to the outer diameter D one-to-one, and the present application takes the minimum air gap δ₁ of the even air gap and the corresponding outer diameter Dᵣ of the rotor iron core 10 as an example for description.

As shown in FIG. 8, when the air gap δ is 0.3mm, the motor efficiency decreases with the increase of the outer diameter D; when the air gap δ is 0.35 mm, the motor efficiency increases first and then decreases with the increase of the outer diameter D; when the air gap δ is 0.4 mm, 0.45 mm and 0.5 mm, the motor efficiency increases with the increase of the outer diameter D. When the outer diameter D is 45mm, the motor efficiency decreases with the increase of the air gap δ; when the outer diameter D is 47mm, 49mm, 51mm, 53mm and 55mm, the motor efficiency first increases and then decreases with the increase of the air gap δ.

The specific analysis is as follows. Taking the case where the motor efficiency increases first and then decreases when the air gap δ increases, the reason for the first increase in the motor efficiency is that when the outer diameter D of the rotor iron core 10 is large. The rotor power density is high, and as the air gap increases, the air gap reluctance increases, the corresponding magnetic flux on the rotor decreases, and the iron loss decreases. From the perspective of motor design, in the range where the motor efficiency increases, the magnetic load on the motor is higher than the electrical load, and in the process of increasing the air gap δ, the magnetic load gradually decreases, while the electrical load gradually increases until an equilibrium point is reached, the efficiency of the corresponding motor reaches the maximum, after which the magnetic load is smaller than the electrical load, and the motor efficiency gradually decreases.

Similarly, when the air gap δ is 0.35mm, in the process of decreasing the outer diameter D of the rotor iron core 10, the motor efficiency shows a trend of first increasing and then decreasing. Among them, in the increasing range of motor efficiency, the side area of the rotor decreases, and the air-gap reluctance increases. The magnetic load on the motor in this interval is higher than the electrical load, and in the process of reducing the outer diameter of the rotor, the magnetic load increases. It gradually decreases, while the electrical load gradually increases until the two reach a balance, which corresponds to the maximum motor efficiency. After that, the magnetic load is smaller than the electrical load, and the motor efficiency gradually decreases.

Therefore, through a large number of experimental tests and analysis, in this embodiment, the size of the air gap δ and the rotor outer diameter D are arranged to satisfy the following condition: the quotient obtained by dividing the product of the minimum air gap δ₁ of the even air gap and the number 2p of the sector-shaped portion 14 by the corresponding circumference of the rotor iron core 10 is greater than or equal to 0.01 and less than or equal to 0.05. Under this condition, the motor efficiency can be optimized.

Specifically, 0.01≤2*p*δ₁/(*πDᵣ*)≤0.05, where πDᵣ is the circumference of the rotor iron core 10 corresponding to the minimum air gap δ₁, and Dᵣ is the outer diameter of the rotor iron core 10 corresponding to the minimum air gap δ₁. For example, if the air gap width δ₁ is selected as 0.35mm and the outer diameter *Dᵣ* of rotor iron core10 is 50.2mm, the air gap aspect ratio is 0.022.

The above design method achieves the purpose of improving the efficiency and power density of the motor 100 by limiting the range of the air gap aspect ratio. Next, the ratio of the minimum air gap to the maximum air gap of the uneven air gap is further optimized to reduce the vibration noise of the motor 100.

In one embodiment, if the sine of the magnetic field of the motor 100 is poor, the harmonic content of the motor 100 is relatively high, and the interaction of the harmonic magnetic fields of the stator and the rotor during the operation of the motor 100 is likely to generate ripple torque and radial force waves. In turn, torque fluctuation and radial vibration are generated, which brings noise problems to the operation of the motor 100. By reasonably optimising the design of the air gap between the stator iron core 20 and the rotor iron core 10, so that the reluctance of the air gap is periodically distributed, the harmonic magnetic field is improved, thereby avoiding or reducing the vibration and noise of the motor 100.

Therefore, in order to reduce the vibration noise of the motor 100 and optimize the magnetic field in the air gap space, so as to ensure the sine degree of the magnetic field, the air gap magnetic resistance should be sinusoidally distributed as much as possible, so that the content of the harmonic components contained in it should be reduced as much as possible. It is also necessary to optimize the design of the outer contour of the rotor iron core 10. The present application further optimizes the uneven air gap under the premise of optimizing the aspect ratio of the air gap, so as to minimize the harmonic content of the motor magnetic field.

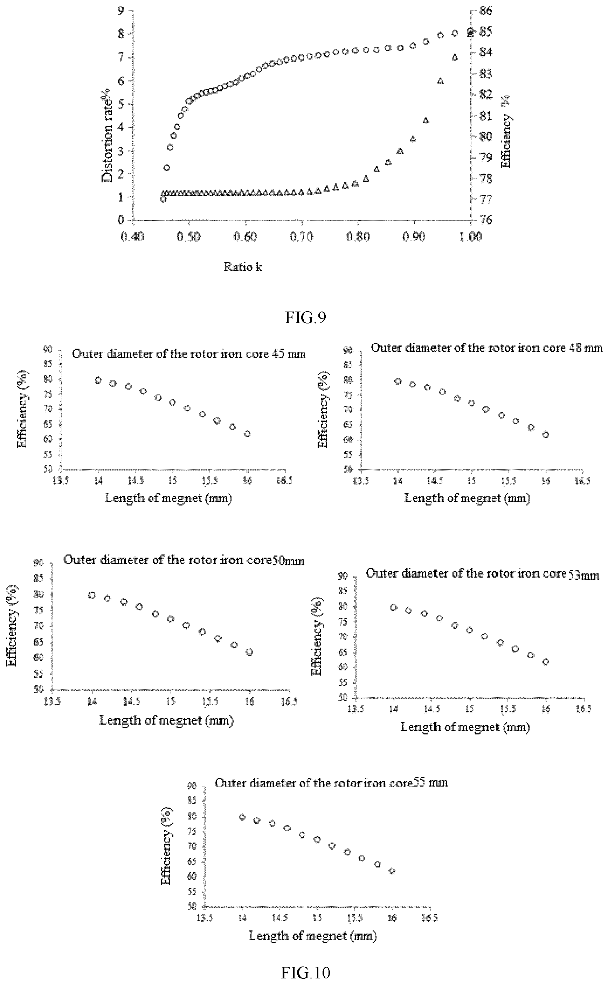

As shown in FIG. 6, the minimum air gap between stator iron core 20 and rotor iron core 10 is δ₁, and the maximum air gap is δ₂. In the process of optimizing the outer contour of the rotor iron core10, the maximum air gap δ₂ and the minimum air gap δ₁ and their transition process are optimized. The specific design process should satisfy the balance between the motor efficiency and the magnetic field distortion rate, and the magnetic field distortion rate and performance of the motor should be optimally analyzed to obtain the variation trend of the motor efficiency and distortion rate with the ratio k of the maximum air gap and the minimum air gap, as shown in FIG. 9.

As shown in FIG. 9, in the experimental verification analysis of the distortion rate and performance of the motor 100, with the increase of the ratio k, the motor efficiency drops significantly. The provided magnetic flux area decreases, thereby reducing the power density of the rotor, and at the same time, the Carter coefficient of the air gap increases, and the performance and efficiency of the motor 100 decrease in the overall trend. The maximum air gap δ₂ is too narrow, and the motor efficiency is higher. This is because the magnet 30 has a larger radial dimension and length, which can provide a larger magnetic energy product. At the same time, the Carter coefficient of the air gap is small, and the motor efficiency increases, but due to the gap between the maximum air gap δ₂ and the minimum air gap δ₁ is small, and the sinusoidal fluctuation of the air gap reluctance has little effect on the overall magnetic circuit, so the magnetic field distortion rate is high, and the goal of optimizing the air gap magnetic field cannot be achieved.

In this embodiment, by seeking a balance range between the distortion rate and the efficiency, when the ratio k of the minimum air gap δ₁ to the maximum air gap δ₂ of the even air gap is determined to be greater than or equal to 0.5 and less than or equal to 0.8, the motor efficiency can be guaranteed to be high. At the same time, its magnetic field distortion rate is low.

Further analysis found that when the minimum air gap δ₁ is greater than or equal to 0.2 mm and less than or equal to 0.5 mm, it can more accurately ensure that the motor efficiency is high and the magnetic field distortion rate is low.

For example, the minimum air gap δ₁ is designed to be 0.3mm, and it is reasonable to determine the maximum air gap δ₂ to be between 0.37-0.6. In this embodiment, the air gap ratio coefficient k is selected to be 0.65, and the maximum air gap δ₂ is determined to be 0.46 mm.

In one embodiment, with reference to FIG. 10 , in order to improve the efficiency of the motor 100 and reduce the cost of the motor, the present application also provides an optimization method for the motor 100 from the perspective of the rotor outer diameter D of the motor 100 and the radial length *l*_{PM} of the magnet 30 implementation.

Specifically, as the outer diameter D of the rotor iron core 10 increases, the radial length *l*_{PM} of the magnet 30 also increases, and the motor magnetic energy product also increases accordingly. However, an excessively strong magnetic energy product will lead to an increase in the iron loss of the motor 100. On the premise that the outer diameter of the motor remains unchanged, it will also bring about the problem of reducing the area of the stator slot that can be wound. Therefore, only a smaller diameter winding can be used to ensure the area occupied by the windings, which will lead to increased winding resistance and increased copper losses. Therefore, rationally allocating the space of stator iron core 20, rotor iron core 10 and magnet 30 is the key to maximizing power density and efficiency of motor 100.

In this embodiment, through a large number of experimental verification and analysis, the changing trend between the proportional relationship between the rotor outer diameter Dᵣ and the radial length *l*_{PM} of the magnet 30 and the motor efficiency is obtained as shown in FIG. 10.

As shown in FIG. 6 and FIG. 10, when the outer diameter of the rotor is 45 mm and 48 mm, the motor efficiency decreases with the increase of the radial length *l*_{PM}. In this interval, the magnetic load of the motor is more than the electrical load, and then the magnetic load is related to the electrical load. The gap between the loads gradually increases, the degree of magnetic supersaturation of the motor is high, the iron loss gradually increases, and the motor efficiency gradually decreases. When the outer diameter of the rotor is 50 mm, the motor efficiency increases first and then decreases with the increase of the radial length *l*_{PM}. In the section where the motor efficiency increases, the magnetic load of the motor increases with the increase of the radial length *l*_{PM} increase, and the electrical load gradually decreases until the two reach a balance, and the motor efficiency also reaches a local peak. After that, the magnetic load exceeds the electrical load, and the motor efficiency gradually decreases. When the outer diameter of the rotor is 53 mm and 55 mm, the motor efficiency increases with the increase of the radial length *l*_{PM}. In this section, the magnetic load of the motor increases with the increase of the radial length *l*_{PM}, and the difference between the magnetic load and the electrical load increases. The gap is gradually narrowing, and the motor efficiency is gradually improving.

Therefore, after experimental verification and analysis, the radial length *l*_{PM} and the rotor outer diameter Dᵣ of the magnet30 with the best efficiency should meet the following conditions: the quotient obtained by dividing the circumference of the largest circumference formed by the outer circumference of the rotor iron core10 by the number of sector-shaped portions 14 and the radial length *l*_{PM} of the magnet 30 of the rotor iron core 10 is greater than or equal to 1 and less than or equal to 1.4. Among them, the circumference determined by the outer diameter Dᵣ corresponding to the minimum air gap δ₁ is the maximum circumference, that is, 1≤(πDᵣ)((2p*l*_{PM})≤1.4). For example, the outer diameter Dᵣ of the rotor is selected to be 50 mm, and a suitable size range of the radial length *l*_{PM} of the magnet 30 can be obtained, and a regular value can be selected within this range.

In one embodiment, referring to FIG. 2 , in order to improve the efficiency of the motor 100, the present application also provides an implementation manner for optimizing the motor 100 from the perspective of the axial dimensions of the stator iron core 20 , the rotor iron core 10 and the magnet 30 of the motor 100.

First of all, in the actual motor cost composition, the main parts of the materials that are beneficial to motor performance are the cost of copper (winding 26), the cost of steel/iron (stator iron core 20 and rotor iron core 10), and the cost of magnet (magnet30). Proportionally, copper cost>magnet cost>steel cost. Because magnet 30 is combined with rotor iron core 10 and then magnetized, magnet 30 cannot reach saturation. Therefore, if you want to maintain better efficiency performance of the motor, you must increase the cost of copper, and copper is a precious metal, so increase the amount of copper used will increase the cost of motor 100. If the motor performance is improved by increasing the amount of magnet 30, there will be a certain marginal effect. When the amount of magnet 30 exceeds a certain threshold, the improvement of motor performance is not obvious, but the cost of the motor increases significantly. If the level of magnet 30 is increased, for example, the original use of 6 series is changed to 9 series, then the price of magnet 30 will double, the cost of the motor 100 will be higher. For motor 100, the price of steel/iron material is lower than that of copper and magnet 30. Therefore, increasing the length of the rotor iron core10 along the axial direction to improve the motor performance is relatively preferred, that is, the motor 100 solution provided in the present application can improve the performance of motor 100 with relatively small cost.

As shown in FIG. 2, in this embodiment, the axial length L3 of the magnet 30 is set to be greater than or equal to the axial length L1 of the rotor iron core 10. The collar portion 12 has a shaft hole 120, and the axial direction is the axis direction of the shaft hole 120. Specifically, the two end surfaces of the magnet 30 can be set to be aligned with the two end surfaces of the rotor iron core 10, or one end surface of the magnet 30 can be aligned with one end surface of the rotor iron core 10, and the other end surface of the magnet 30 protrudes from the other end surface of the rotor iron core 10. The two end surfaces of the magnet 30 respectively protrude from the two end surfaces of the rotor iron core 10, and the protruding lengths of the two end surfaces of the magnet 30 relative to the two end surfaces of the rotor iron core 10 may be equal or different. The above setting method can generate a relatively saturated magnetic field in the rotor iron core 10, improve the magnetic density on the rotor iron core 10, and then improve the power density of the motor 100, so as to improve the performance efficiency of the motor 100.

In some embodiments, the length L₁ of the rotor iron core 10 in the axial direction of the shaft hole 120 can also be set to be greater than or equal to the length L₂ of the stator iron core 20 in the axial direction.

In some embodiments, the length L₁ of the rotor iron core 10 in the axial direction is equal to the length L₂ of the stator iron core 20 in the axial direction, and the two end surfaces of the rotor iron core 10 are aligned with the two end surfaces of the stator iron core 20, so that the side surfaces of the rotor iron core 10 are at least aligned with the inner side of stator iron core 20 to facilitate magnetic field distribution and flux conversion in the air gap interval.

In other embodiments, the length L₁ of the rotor iron core 10 in the axial direction is greater than the length L₂ of the stator iron core 20 in the axial direction, and the first end surface of the rotor iron core 10 is relatively protruding or aligned with the first end of the stator iron core 20 in the axial direction. surface, the second end surface of the rotor iron core10 protrudes relatively from the second end surface of the stator iron core 20.

Since at least one end surface of the rotor iron core 10 protrudes from the end surface of the stator iron core 20, the protruding end magnetic field of the rotor iron core 10 can be used to make up for the performance loss caused by the unsaturated magnetization of the magnet 30, which improve the performance of motor 100 with small cost.

In one embodiment, the ratio of the length L₁ of the rotor iron core 10 to the length L₂ of the stator iron core 20 is greater than or equal to 1.0 and less than or equal to 1.25, and this size range will compensate for the magnetization unsaturated effect of the magnet 30 with a higher axial end magnetization effect. The resulting performance loss is used to increase the power density of the motor 100 to improve the efficiency performance of the motor 100.

In this embodiment, the first end surface of the rotor iron core 10 is aligned with the first end surface of the stator iron core 20, the second end surface of the rotor iron core 10 protrudes from the second end surface of the stator iron core 20, and the two ends of the magnet 30 protrude in the axial direction relative to the rotor iron core 10, and then use the protruding ends of the magnet 30 from the rotor iron core 10 to generate a magnetic field entering the rotor iron core 10 due to the end effect, and use the end of the magnet 30 protruding from the rotor iron core 10 to generate magnetic field contacted with the stator iron core 10 to improve the efficiency of the motor 100.

In one embodiment, the protruding lengths of both ends of the magnet 30 relative to the two ends of the rotor iron core 10 are the same, so that the magnetic densities generated by the magnet 30 in the rotor iron core 10 are the same, and the performance of the rotor iron core 10 is more balanced, which is favorable to improve the motor 100 performance.

In one embodiment, the quotient obtained by dividing the difference between the length L₃ of the magnet 30 in the axial direction and the length L₁ of the rotor iron core 10 by the length L₂ of the stator iron core 20 is greater than or equal to 0.15 and less than or equal to 0.45. The magnetic concentration effect produces a higher end magnetic field to improve the performance of the motor 100.

In addition, the two end surfaces of the magnet 30 can also protrude asymmetrically in the axial direction relative to the two end faces of the stator iron core 20, that is, the protruding lengths of the magnet 30 from the two end surfaces of the stator iron core 20 are different, wherein the magnet 30 protrudes from the end surface of the stator iron core 20. The end with the longer protruding length is used to install the sensor to monitor the running state of the motor 100. The end of the magnet 30 protruding from the end surface of the stator iron core 20 with the shorter length can produce a higher end magnetic field with the magnetization effect at the end to improve the performance of the motor 100.

In one embodiment, the first length L₄ of the magnet 30 protruding from the first end surface of the stator iron core 20 is greater than or equal to 2 mm and less than or equal to 6 mm, and the second length L₅ of the magnet 30 protruding from the second end surface of the stator iron core 20 is greater than or equal to 4 mm and less than or equal to 8 mm. The size range of the first length L₄ can not only facilitate the installation of sensors to detect the running state of the motor 100, but also cooperate with the size range of the second length L₅ to improve the performance of the motor 100 with a higher end magnetic field generated by the end magnetic concentration effect.

In one embodiment, referring to FIGS. 10 to 17, in order to prevent foreign objects such as iron filings from entering the air gap between the stator and the rotor, the stator and the rotor are damaged by friction with the iron filings, thereby reducing the efficiency of the motor 100 and producing abnormal noises, etc. If the situation occurs, the present application also provides an optimization method for the rotor from the perspective of the rotor, so as to reduce the influence on the motor performance, noise and reliability caused by foreign objects such as iron filings in the air gap.

In the first embodiment, a debris adsorption groove 41 is provided on the overmold 40.

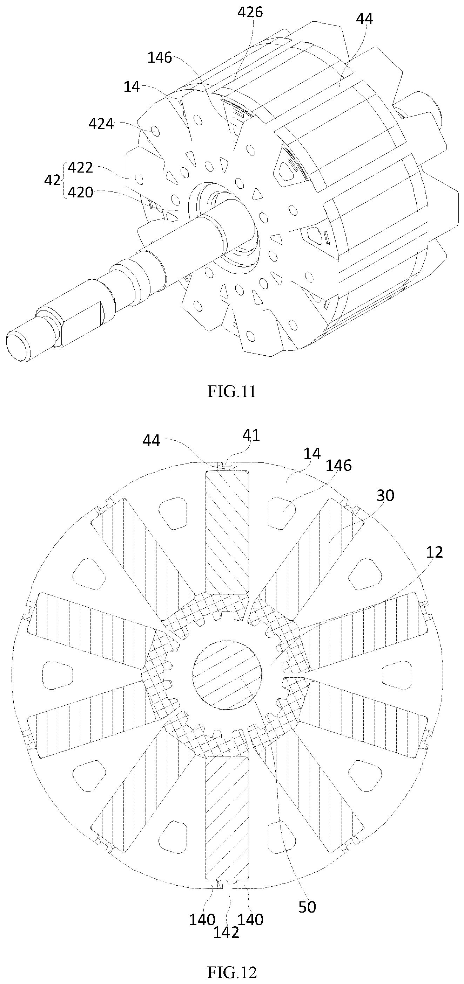

Referring to Fig. 11 to Fig. 13, the overmold 40 covers the magnet 30 and is formed on the two end surfaces and the side of the rotor iron core 10. The part of the overmold 40 formed on the side of the rotor iron core 20 is provided with a debris adsorption groove 41. The debris adsorption groove 41 is used to absorb the rotor during the operation. The adsorbed tiny foreign objects reduce the risk of friction between the rotor and the stator when the rotor is rotated due to foreign objects such as metal chips being adsorbed on the surface of the rotor, which is beneficial to improve the performance of the motor.

The overmold 40 specifically includes an end surface covering portion 42 and a side filling portion 44. The end surface covering portion 42 covers the magnet 30 on the end face of the rotor iron core 10 and exposes the collar portion 12 and the sector-shaped portion 14 on the end surface of the rotor iron core 10. That is, the end surface covering portion 42 covers at least the magnet 30 on the end surface of the rotor iron core 10 and exposes at least part of the collar portion12 and part of the sector-shaped portion 14.

The end surface covering portion 42 covers and wraps the protruding portion of the magnet 30 from the end surface of the rotor iron core 10, and plays an axial fixing role for the magnet 30. Further, positioning holes may be provided on two opposite sides of the magnet 30 for positioning the axial length of the end surface of the magnet 30 protruding from the rotor iron core 10.

In this embodiment, at least one positioning hole 424 is formed on the end surface covering portion 42 corresponding to each magnet 30. For example, two positioning holes 424 are formed on the end surface covering portion 42 corresponding to each magnet 30. The positioning hole 424 is used for positioning the magnet 30, and can reduce the material used for the end surface covering portion 42, and further, fill the positioning hole 424 to perform dynamic balance correction on the rotor.

The end surface covering portion 42 includes a collar covering sub-portion 420 and a plurality of magnet covering sub-portion 422, the plurality of magnet covering sub-portion 422 are radially connected to the collar covering sub-portion 420, the collar covering sub-portion 420 covers at least part of the collar portion 12, and each magnet covering sub-portion 422 covers at least a magnet 30 correspondingly, a space is formed between the magnet covering sub-portion 422 and the sector-shaped portion 14 is exposed.

In one embodiment, a balance hole 146 may be provided on a portion of the sector-shaped portion 14 exposed from the end surface covering portion 42, and the balance hole 146 penetrates the sector-shaped portion 14. The arrangement of the balance hole 146 can not only reduce the weight of the rotor iron core 10, but also can dissipate heat to the rotor iron core 10, and can also perform dynamic balance correction of the rotor by filling the balance hole 146 with material to increase the weight.

In this embodiment, each sector-shaped portion 14 is provided with a balance hole 146. In other embodiments, the balance hole 146 may be provided only on part of the sector-shaped portion 14.

In one embodiment, a retaining ring 426 may also be arranged between two adjacent magnet covering sub-portions 422, the retaining ring 326 is arranged at the outer periphery of the sector-shaped portion 14, and thus the balance hole 146 is arranged an area enclosed by the retaining ring 426 , the magnet covering sub-portion 422 and the collar covering sub-portion 420, the retaining ring 426 can prevent the filler from overflowing to the side of the rotor iron core 10 when filling the balance hole 146, and can also increase the reliability of the filler being fixed on the rotor iron core 10, and prevent the centrifugal force from causing throwing off of the filler when the rotor rotates at high speed. It is also easy to handle the packing quickly and reduce the risk of quality problems.

The side filling portion 44 is connected to the end surface covering portion 42, covers the magnet 30 on the side of the rotor iron core 10, and exposes the sector-shaped portion 14 on the side of the rotor iron core 10; the debris adsorption groove 41 is formed in the side filling portion 44.

Optionally, the debris adsorption groove 41 is formed in the side filling portion 44 extending along the axial direction of the rotor iron core 10. Alternatively, the debris adsorption groove 41 is arranged in the side filling portion 44 with an angle relative to the axial direction.

Optionally, a plurality of debris adsorption grooves 41 are arranged in the side filling portion 44, and a debris adsorption groove 41 is formed on the side filling portion 44 corresponding to each magnet 30. Alternatively, a debris adsorption groove 41 is formed on the side filling portion 44 corresponding to every two magnets 30. Alternatively, a plurality of debris adsorption grooves 41 are formed on the side filling portion 44 corresponding to each magnet 30, and the plurality of debris adsorption grooves 41 are distributed along the axial direction.

It should be noted that the side filling portion 44 is connected to the side surface of the rotor iron core 10 in alignment, that is, the connection is smoothly transitioned, so as to reduce the wind resistance suffered by the rotor when it rotates.

In one embodiment, the sector-shaped portion 14 protrudes away from the outer edge of the collar portion 12 toward the accommodating groove 16 to form a stopper 140, and the magnet 30 abuts against the stopper 140; the two opposite stoppers 140 between two adjacent sector-shaped portions 14 form a gap 142, and the existence of the gap 142 is beneficial to greatly reduce the magnetic flux leakage of the rotor iron core 10. The side filling portion 44 is filled in the gap 142, and the side filling portion 44 is connected to the side surfaces of the rotor iron core 10 in alignment, and the side filling portion 44 is connected to the magnet covering sub-portion 422 on both end surfaces of the rotor iron core 10.

In the second embodiment, the magnet 30 is provided with a debris adsorption groove 32.

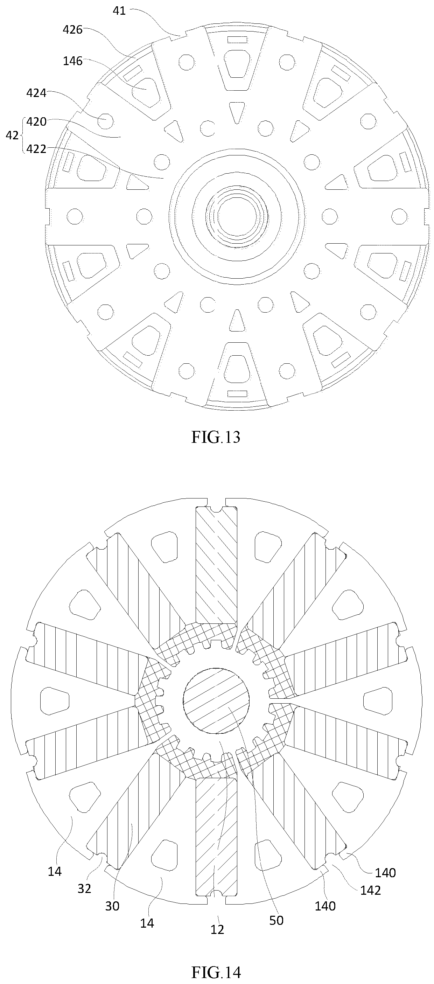

Referring to FIG. 14, compared with the above embodiment, the main difference is that one side of the magnet 30 is exposed from the side of the rotor iron core 10 and the debris adsorption grooves 32 are arranged thereon, and then a plurality of debris adsorption grooves 32 are exposed from the side of the rotor iron core 10.

Specifically, the debris adsorption groove 32 is exposed from the gap 142 formed by the two stoppers 140, and foreign objects such as iron filings can enter the debris adsorption groove 32 from the gap 142 and be magnetically absorbed by the debris adsorption groove 32, so as to avoid the foreign matter such as iron filings from affecting the motor's performance, noise and reliability.

In this embodiment, the overmold 40 is not filled in the gap 142, that is, the overmold 40 does not include the above-mentioned side filling portion 44, the overmold 40 includes the end surface covering portion 42, and the debris adsorption groove 32 is exposed from the gap 142.

Optionally, the overmold 40 is also filled in part of the gap 142, so that the overmold 40 can also be formed on the side of the rotor iron core 10, and the debris adsorption groove 32 is exposed from the gap 142 that is not filled with the overmold 40.

In some embodiments, the debris adsorption groove 32 is formed on the magnet 30 along the axial direction of the rotor iron core 22, that is, a debris adsorption groove 32 is formed on the magnet 30 along the axial direction.

In other embodiments, a plurality of debris adsorption grooves 32 are distributed along the side of one magnet 30 in the axial direction. Alternatively, a debris adsorption groove 32 is formed on one of the adjacent two, three, etc. of magnets 30.

There is a debris adsorption groove 32 on the magnet 30, which is equivalent to reducing the volume of the magnet 30. In order to minimize the influence of the reduced volume of the magnet 30 on the performance of the rotor, the magnetic field of the magnet 30 is analyzed to determine a reasonable position to open the debris adsorption groove 32.

The simulation analysis shows that the magnet part of the magnet 30 exposed in the gap 142 has the lowest magnetic induction intensity, and the magnetic induction intensity of the part of the magnet that is covered by the stopper 140 is the highest on both sides adjacent to the lowest magnetic induction intensity. In order to minimize the impact of slotting on the magnet 30 on the performance of the rotor 100, and at the same time use the high magnetic field on the magnet30 to attract foreign objects such as iron filings, a debris adsorption groove 32 is opened at the low magnetic field of the magnet 30, and the debris adsorption groove 32 is exposed from the gap 142 to the rotor. The side of the iron core 10 to attract foreign objects such as iron filings into it, so as to avoid the impact of iron filings on motor performance, noise and reliability.

In the third embodiment, the rotor iron core 10 is provided with the debris adsorption groove 144.

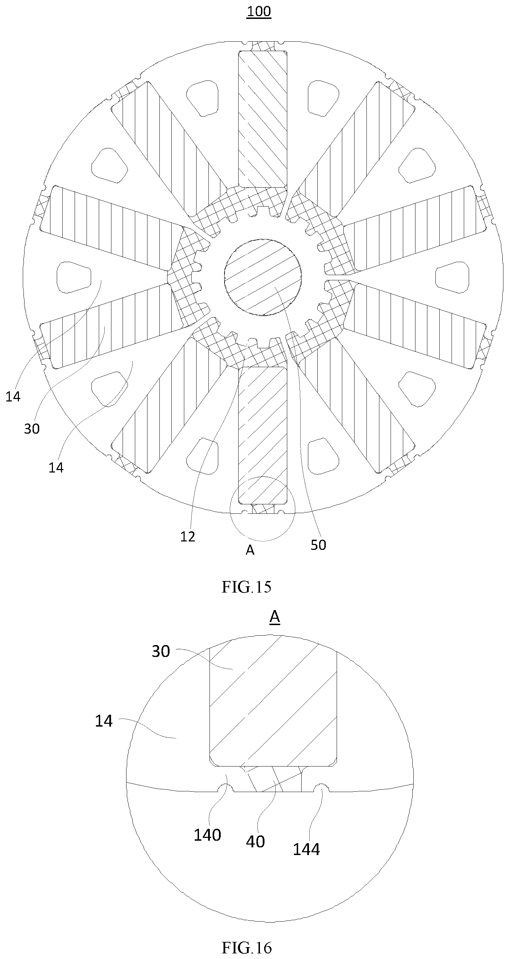

Referring to FIG. 15 to FIG. 17, compared with the above-mentioned embodiments, the main difference is that the side of the sector-shaped portion 14 away from the collar portion 12 is provided with a debris adsorption groove 144. The debris groove adsorption 144 may be provided anywhere on the sidewall of the sector-shaped portion 14 away from the collar portion 12.

In this embodiment, a side of the stopper 140 away from the collar portion 12 is provided with a debris adsorption groove 144.

Since the cross-section of the stopper 140 is sharply reduced relative to the cross-section at other positions of the sector-shaped portion 14, the magnetic flux passing through the stopper 140 is greatly greater than the magnetic flux passing through the same size crosss-sectional area of the sector-shaped portion 14, even the stopper 140 is in a state of magnetic saturation, that is, the magnetic induction intensity at the stopper 140 is high. At the same time, the electromagnetic simulation analysis of the rotor iron core10 also shows that the magnetic induction intensity at the connection of the stopper 140 is high, so it can absorb the iron filings and other small foreign objects outside the rotor iron core10. and choose to arrange debris adsorption groove144 on stopper 140.

Therefore, in the present application, the magnetic field distribution on the rotor iron core 10 is fully and effectively used, and the debris adsorption groove 144 is arranged on the stopper 140 to absorb impurities such as iron filings, and at the same time, the performance of the rotor iron core 10 is not adversely affected, and due to the location of the debris adsorption groove 144, the magnetic field strength at the rotor iron core 10 is stronger than that at other positions on the side of the rotor iron core 10, so the debris adsorption groove 144 can effectively adsorb tiny foreign objects such as iron filings.

In some embodiments, as shown in FIG. 16, the two stoppers 140 with the gap 142 can also be connected into one body, that is, the outer peripheries of the adjacent sector-shaped portions 14 are connected to each other, so that the overmold 40 only includes the end surface covering portion 42 , and the debris adsorption groove 144 can also be arranged in the sector-shaped portion 14 away from any position on the side wall of the collar portion 12.

It should be noted that the above debris adsorption grooves (41, 32, 144) can exist at the same time, one of the three, or two of the three, which can effectively prevent foreign objects such as iron filings from affecting motor's performance, noise and reliability.

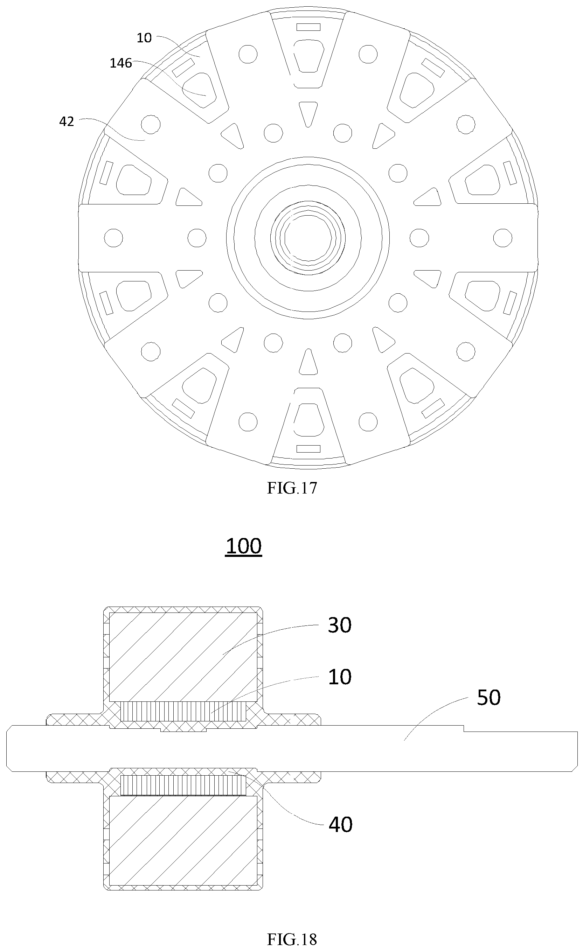

In one embodiment, referring to FIG. 18 , in order to reduce the shaft voltage on the rotor shaft 50, the present application also provides an embodiment optimized for the rotor from the perspective of the rotor shaft 50 and the shaft hole 120 to electrostatically isolate the rotor iron core 10 and the rotor shaft 50.

In some embodiments, the rotor shaft 50 and shaft hole 120 may be fitted with interference.

In this embodiment, as shown in FIG. 18 , the diameter of the shaft hole 120 is larger than the diameter of the rotor shaft 50 , the rotor shaft 50 and the shaft hole 120 are coaxially arranged to keep the rotor in dynamic balance as a whole, and the rotor shaft 50 and the rotor iron core 10 are combined into one piece through the overmold 40.

In one embodiment, the overmold 40 is filled between the rotor shaft 50 and the inner wall of the shaft hole 120 to isolate and insulate the rotor iron core 10 and the rotor shaft 50, and to fix the rotor shaft 50 and the rotor iron core 10, thereby changing the electrostatic capacity of the rotor side, so that the electrostatic capacity of one side of the rotor and the electrostatic capacity of the matched stator side are easily balanced, thereby reducing the shaft voltage on the rotor shaft 50 and improving the electrical corrosion of the bearing.

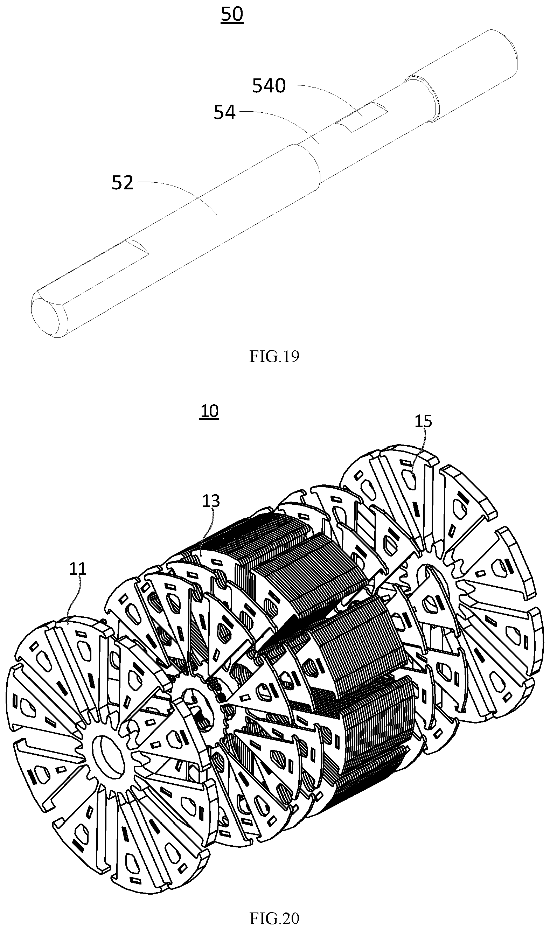

In one embodiment, as shown in FIG. 19, the rotor shaft 50 includes a shaft body 52 and a shaft groove 54 provided on the shaft body 52, and the outer diameter of the shaft groove 54 is smaller than the outer diameter of the shaft body 52. The portion corresponding to the shaft groove 54 is arranged in the shaft hole 120, and the overmold 40 is filled between the shaft groove 54 and the inner wall of the shaft hole 120.

In some embodiments, the shaft body 52 may further be provided with a plurality of shaft grooves 54, the plurality of shaft grooves 54 are distributed on the shaft body 52 at intervals along the axial direction, and the plurality of shaft grooves 54 are all arranged in the shaft hole 120, so that the overmold 40 is filled in the shaft hole 120. Between the plurality of shaft grooves 54 and the inner side wall of the shaft hole 120, the rotational torque between the rotor shaft 50 and the rotor iron core 10 can be increased to prevent the rotor shaft 50 and the rotor iron core 10 from loosening.

In other embodiments, the surface of the shaft groove 54 is protruded or recessed to form a disengagement prevention portion 540 for increasing the rotational torque between the rotor shaft 50 and the rotor iron core 10, preventing falling off between the rotor shaft 50 and the iron core10 during use.

For example, a groove-shaped disengagement prevention portion 540 is formed on the surface of the shaft groove 54, or a boss-shaped disengagement prevention portion 540 is formed on the surface of the shaft groove 54, and the combination of the overmold 40 and the disengagement prevention portion 540 can increase the rotation torque between the rotor shaft 50 and the rotor iron core 10.

In one embodiment, the overmold 40 is made of elastic material, so as to absorb and buffer the tangential moment fluctuation of the rotor iron core 10 and the rotor shaft 50 during the rotation process, so as to reduce abnormal vibration transmitted through the rotor shaft 50 and reduce vibration noise.

In one embodiment, with reference to FIG. 20 to FIG. 24, in order to reduce the magnetic flux leakage of the motor 100, the present application also proposes an implementation method for optimizing the rotor iron core 10 from the perspective of the rotor iron core structure.

Referring to FIG. 20 to FIG. 22, the rotor iron core 10 includes a first rotor punching group 11, a second rotor punching group 13 and a third rotor punching group 15 which are stacked in sequence.

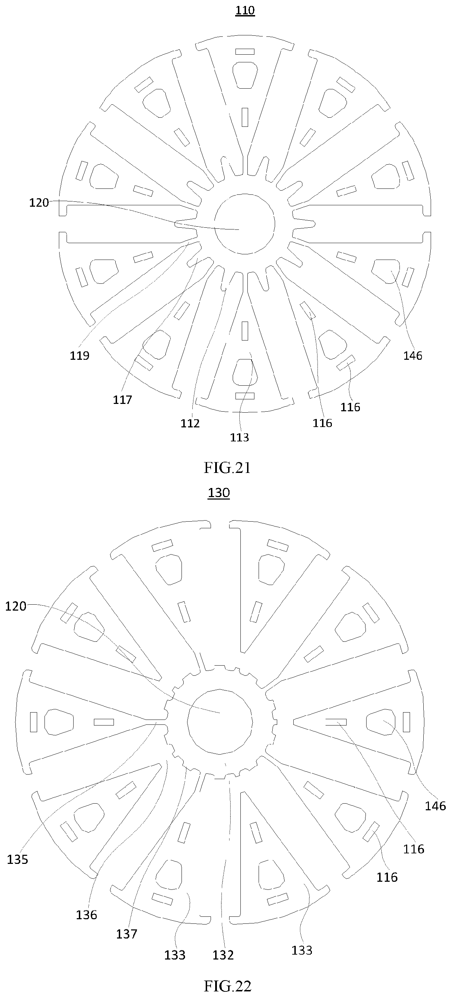

As shown in FIG. 21, both the first rotor punching group 11 and the third rotor punching group 15 are formed by stacking a plurality of first rotor punching plates 110, and the first rotor punching plate 110 includes a first ring plate 112 and a plurality of first sector-shaped plates 113 arranged at intervals around the first ring plate 112, a plurality of first sector-shaped plates 113 in each first rotor punching plate 110 are connected to the first ring plate 112.

As shown in FIG. 22, the second rotor punching group 13 is formed by stacking a plurality of second rotor punching plates 130. The second rotor punching plate 130 includes a second ring plate 132 and a plurality of second sector-shaped plates 133 arranged at intervals around the second ring plate 132. In each second rotor punching plate130, the second sector-shaped plate133 and the second ring plate132 are connected and disconnected alternately.

The first ring plate 112 and the second ring plate 132 are stacked to form the collar portion 12, and the first sector-shaped plate 113 and the second sector-shaped plate 132 are stacked to form the sector-shaped portion 14.

The connection and disconnection of the second sector-shaped plate 133 and the second ring plate132 in the second rotor punching plate130 are staggered, so part of the second sector-shaped plate 133 is not connected to the second ring plate 132, that is, part of the second sector-shaped plate 133 is independent of the second ring plate 132. It is fixed by other second sector-shaped plates 133 stacked adjacent to each other, that is, there is an air gap magnetic resistance between the second sector-shaped plate 133 and the second ring plate 132, so that magnetic leakage can be reduced; the second sector-shaped plate 133 is connected to the second ring plate 132, so that the overall strength of the second rotor punching group 13 can be ensured, thereby ensuring the overall strength of the rotor iron core 10.

In one embodiment, the first sector-shaped plate 113 and the second sector-shaped plate 133 are provided with riveting points 116 at the same positions, and two adjacent rotor punches are connected by the riveting points 116, that is, they are arranged adjacent to each other in the axial direction. The two first rotor punching plates 110, the two second rotor punching plates 130, and the first rotor punching plates 110 and the second rotor punching plates 130 are all connected by riveting points 116.

In this embodiment, among the two adjacent second rotor punching plates 130 of the second rotor punching group 13, the second sector-shaped plates 133 connected to the second ring plates 132 and the second sector-shaped plates 133 not connected to the second ring plates 132 are stacked.

The plurality of second rotor punching plates 130 in the second rotor punching group 13 may also have other arrangements. For example, half of the second rotor punching plates 130 are stacked on each other, and a second sector-shaped plate 133 is deflected relative to the other half of the second rotor punching plates 130 stacked on each other to form the second rotor punching group13. Alternatively, the second rotor punching group 13 further includes a first rotor punching plate 110, and the first rotor punching plates 110 are distributed among the plurality of second rotor punching plates 130. The above is only an example, and the present application does not limit the specific arrangement of the second rotor punching group 13.

This structural arrangement of the second rotor punching group13 can reduce the magnetic flux leakage and improve the back EMF coefficient of the rotor iron core 10, thereby improving the performance of the motor 100, ensuring the strength of the rotor iron core 10 itself, and helping to reduce the centrifugal force caused by the rotation during rotation. risk of strength failure.

In one embodiment, as shown in FIGS. 21 and 22, a side of the first ring plate 112 facing the first sector-shaped plate 113 is formed with a plurality of spaced first limiting posts 117, and the first limiting post 117 is arranged between two adjacent first sector-shaped plates 113. A plurality of second limiting posts 137 are formed on the side of the second ring plate 132 facing the second sector-shaped plate 133, and the second limiting posts 137 are arranged between two adjacent second sector-shaped plates 133. The length of the first limiting post 117 in the radial direction of the first ring plate 112 is greater than the length of the second limiting post 137 in the radial direction of the second ring plate 132.

The number of the first limiting post 117 and the second limiting post 137 are plural, and they are stacked to each other correspondingly. The longer first limiting post 117 is used to limit the magnet 30 in the accommodating groove 16, and the shorter second limiting post 137 is guaranteed not to be in contact with the magnet 30 and not to be in contact with the magnet 30. There is a certain air gap between the magnets 30, which can effectively reduce the leakage of the magnetic circuit through the second limiting post 137, thus reducing the magnetic leakage of the rotor iron core 10.

In one embodiment, balance holes 146 are provided at the same positions of the first sector-shaped plate 113 and the second sector-shaped plate 133, each of the balance holes 146 is correspondingly stacked, and the balance holes 146 penetrate the sector-shaped portion 14.

A connecting bridge structure is provided between the first sector-shaped plate 113 and the first ring plate 112 and between the second sector-shaped plate 133 and the second ring plate 132. Specifically, the plurality of first sector-shaped plates 113 are connected to the first ring plate 112 through the first connecting bridge 119. The second rotor punching plate 13 is provided with a second connecting bridge 135 and a breaking connecting bridge 136 in a staggered manner, wherein a part of the second sector-shaped plate 133 is connected to the second ring plate 132 through the second connecting bridge 135, and another part of the second sector-shaped plate 133 and the second ring plate 132 are arranged at intervals through the breaking connecting bridge 136, the gap between the second sector-shaped plate 133 and the second ring plate 132 arranged at intervals is as the breaking connecting bridge 136.

Among them, the ratio of the width of the first connecting bridge 119, the second connecting bridge 135 and the breaking connecting bridge 136 along the circumferential direction of the rotor iron core 10 to the thickness of the punching plate is 0.8 to 1.5. The thickness of the punching plate is the punching plate thickness of the first rotor punching plate 11 and the second rotor punching plate 13, and the widths of the first connecting bridge 119, the second connecting bridge 135 and the breaking connecting bridge 136 are all the same. In this size range, the first connecting bridge119 and the second connecting bridge135 have sufficient strength, and the breaking connecting bridge 136 can better reduce the magnetic flux leakage of the rotor iron core 10.

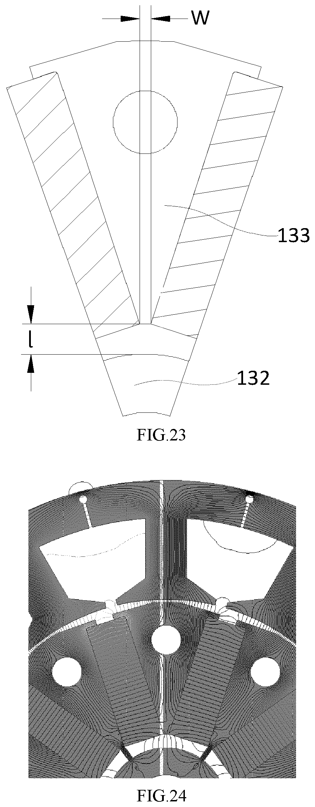

Referring to FIG. 23, the ratio of the length l in the radial direction of the breaking connecting bridge 136 to the width w in the circumferential direction is greater than or equal to a set value. The set value is the quotient obtained by dividing the product of the minimum air gap δ₁ of the uneven air gap and the number of sector-shaped portions 2p by 1% of the circumference of the maximum circumference πDᵣ formed by the outer circumference of the rotor iron core 10.

Specifically, the relationship between the length l and the width w is expressed as l/w≥(200pδ₁)/(πDᵣ ).

As shown in FIG. 24, according to the electromagnetic field theory, when the second sector-shaped plate 133 is disconnected from the second ring plate 132, there is an air-gap magnetic resistance between the second sector-shaped plate 133 and the second ring plate 132. The magnetic leakage is reduced when the second sector-shaped plate is connected to the ring plate 132.

As shown in FIGS. 23 and 24, in order to further reduce the magnetic flux leakage between the second sector-shaped plate 133 and the second ring plate 132, the length l should be increased and the width w should be reduced as much as possible. A smaller length l and a larger width w will result in too large magnetic flux leakage of rotor iron core10, and poor performance of the motor. However, from the viewpoint of stability, too large length l and too small width w will affect the mechanical strength of the rotor iron core 10 and cause safety hazards.

In one embodiment, the length l is greater than or equal to 2.5 mm, and the width w is greater than or equal to 0.3 mm and less than or equal to 1 mm. The length l and width w are both the length and width of the first connecting bridge and the second connecting bridge.

It has been verified by experiments that when the width w is greater than 1mm, the flux leakage of the rotor iron core 10 will increase by more than 10%, and the performance of the motor 100 will be seriously degraded; while when the width w is less than 0.3mm, the strength of the rotor iron core 10 will be insufficient, which will make the rotor iron core 10 insufficient during production or use, the risk of fatigue fracture during use increases dramatically. Therefore, when the width w is in the range of 0.3 mm to 1 mm, the magnetic leakage of the rotor iron core 10 can be maintained in a relatively low range, and the strength of the rotor iron core 10 can also be ensured. Therefore, this design can ensure that the rotor iron core 10 has small magnetic flux leakage, high power density, and high mechanical strength of the rotor iron core 10.

Therefore, selecting an appropriate length l and width w and making them meet l/w≥(200pδ₁)/(πDᵣ ) can reduce the magnetic flux leakage of the rotor iron core 10 as much as possible, improve the power density of the rotor iron core 10, and also ensure the mechanical strength of the rotor iron core 10, improving the power density and efficiency of the motor 100.

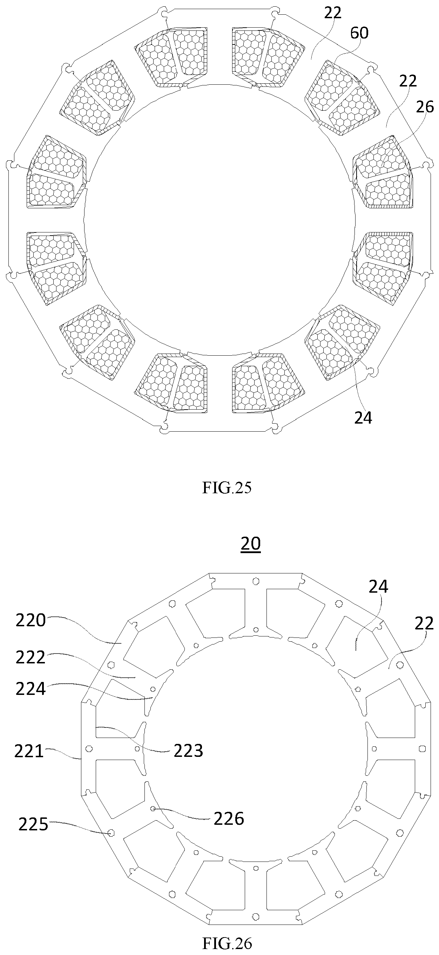

In one embodiment, with reference to FIG. 25 and FIG. 26, in order to improve the material utilization rate of the motor, the present application also proposes an implementation method for optimizing the stator iron core from the perspective of the structure of the stator iron core.

Referring to FIGS. 25, 26, the stator unit 22 is generally T-shaped, the stator unit 22 includes a yoke portion 220, a tooth portion 222 and a tooth shoulder 224, the tooth portion 222 is connected between the yoke portion220 and the tooth shoulder 224, and the plurality of yoke portions 220 of the plurality of stator units 22 are connected in sequence, Furthermore, stator slots 24 are formed between adjacent tooth portions 222 to form a plurality of stator slots 24. The tooth portions 222 are provided with windings 26, and there is a gap between two adjacent tooth shoulders 224.

For example, the stator iron core 20 includes 12 T-shaped stator units 22, which can be matched with rotors with 8 or 10 poles.

In one embodiment, the outer surface 221 of the yoke portion 220 is flat, forming the polygonal outer surface of the stator iron core 20; the inner surface of the tooth shoulder 224 is arc-shaped, forming the circular inner surface of the stator iron core 20, so that the rotor rotates relatively to the stator iron core 20.

A plurality of stator units 22 are arranged to engage and connect in sequence and form a ring to form a stator iron core 20, and when the stator units 22 are not combined into a stator iron core 20, each stator unit 22 is independent of each other, thus improving the quality of the materials used to make the stator units 22. In order to improve the utilization rate, materials of smaller size can also be used and made into the stator unit 22. At the same time, the outer surface 221 of the yoke portion 220 is arranged to be flat, so that the area occupied by the arc-shaped stator unit on the outer surface of the stator unit 22 relative to the yoke portion is smaller, which further improves the utilization rate of materials, thereby reducing the production cost of stator iron core 20.

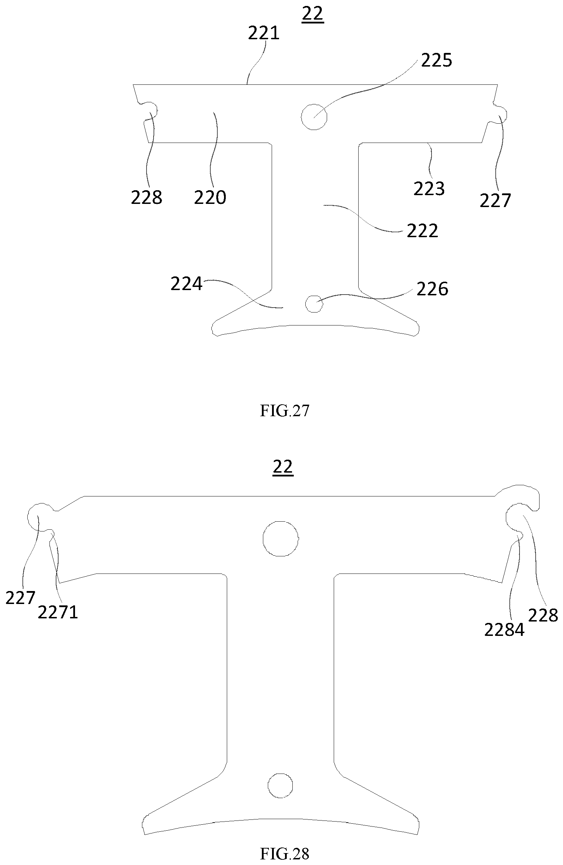

In one embodiment, as shown in FIG. 27, one end of the yoke portion 220 is provided with a protrusion 227, and the other end thereof is provided with a groove 228; a plurality of the yoke portions 220 are sequentially engaged and connected through the protrusion 227 and the groove 228. The protrusion 227 is in a semicircular shape, the groove 228 is in a semicircular groove, and the semi-cylindrical shape is engaged with the semicircular groove to connect two adjacent yoke portions 220.

In one embodiment, as shown in FIG. 28, the root of the protrusion 227 is provided with a snap groove 2271, and the end of the groove 228 on the yoke portion 220 is provided with a snap 2281 correspondingly. The snap 2281 is snap-fitted with the snap groove 2271, thereby the strength of the meshing connection between the stator units 22 can be further enhanced.

Referring to FIGS. 26 and 27, in this embodiment, the inner surface 223 of the yoke portion 220 is further flat and parallel to the outer surface 221 of the yoke portion 220, and the tooth portion 222 is perpendicular to the inner surface 223, so that the wires can be attached to the inner surface 223 and start winding from the inner surface 223, so that the wiring on the tooth portion 222 is neat and the full rate of the winding groove is high.

The inner surface of the yoke portion is a stator iron core with a curved surface, and the maximum slot filling rate of its winding is 65%, while the winding slot filling rate of the stator iron core 20 provided by this application can reach a maximum of 70%, which relatively improves the full rate of the winding slot of the stator iron core 20. And the inner surface 223 is flat, which can further improve the utilization rate of the material for making the stator unit 22, and the outer surface 221 and the inner surface 223 are both flat, the mold structure for making the stator iron core 20 will become simpler, thereby reducing the mold's cost. The cost further reduces the production cost of stator iron core 20.

In one embodiment, the tooth shoulder 224 is configured as a sloping shoulder, which can effectively improve the magnetic saturation at the connection with the tooth portion 222 compared to the straight shoulder.

In addition, the yoke portion 220 is provided with a first rivet point 225, and the tooth shoulder 224 is provided with a second rivet point 226, and the area of the second rivet point 226 is smaller than that of the first rivet point 225. Compared with the solution in which the second riveting point 226 is arranged on the tooth portion 222, the present application moves the second riveting point 226 down to the tooth shoulder 224 and further reduces the size of the second riveting point 226 relative to the first riveting point 225. The size and area can effectively improve the magnetic saturation on the tooth portion 222 and the tooth shoulder 224, and improve the power density of the stator iron core 20.

One purpose of the first riveting point 225 and the second riveting point 226 is: when the stator iron core 20 is formed by a plurality of stator punching plates are stacked, the first riveting point 225 and the second riveting point 226 are provided. The stator iron core 20 is formed by stacking riveted buckles on a plurality of stator punching plates through the first riveting point 225 and the second riveting point 226.

In one embodiment, as shown in FIGS. 10 and 25, the motor 100 further includes a bobbin 60, and the bobbin 60 is an insulating bobbin, which is made of, for example, a resin-based insulating material. The bobbin 60 covers the inner surface 223 of the yoke portion 220, the inner surface of the tooth portion 222 and the tooth shoulder 224 to isolate the windings 26.

In one embodiment, as shown in FIG. 10 , the motor 100 further includes a plastic package 70 , and the plastic package 70 covers the outer periphery and both end surfaces of the stator iron core 20 to encapsulate the stator iron core 20, the winding 26 and the bobbin 60 to avoid impurities Waiting to enter the stator iron core 20.

The present application discloses a motor and a household appliance. By limiting the P-S coefficient range of the motor to 0.4 to 0.5 and 0.8 to 1, and the number of slots per pole and phase of the motor is greater than or equal to 0.35 and less than or equal to 0.5, the number of slots and poles of the motor is optimized to ensure the motor's harmonic component of the tangential electromagnetic force wave is low, which can reduce the vibration and noise of the motor, and at the same time, it can also make the power density and efficiency of the motor high, and the cost of the motor can be effectively reduced.

The motor 100 described above can be used as a power source for home appliances or other fields.

The above are only the embodiments of the present application, and are not intended to limit the scope of the patent of the present application.

## Claims

1. A motor (100), comprising: a rotor iron core (10), comprising: a collar portion (12), a plurality of sector-shaped portions (14) surrounding the collar portion (12) and arranged at intervals, and accommodating grooves (16) formed between every two adjacent sector-shaped portions (14); a plurality of magnets (30), wherein the magnets (30) are embedded in the corresponding accommodating grooves (16) respectively; and a stator iron core (20) sleeved on the rotor iron core (10), comprising a plurality of stator units (22) enclosed in a ring shape; wherein a pole slot factor of the motor (100) is an absolute value of the difference between a number of the stator units (22) and a number of the sector-shaped portions (14), and a P-S coefficient of the motor (100) is a sum of a reciprocal of the pole slot factor and a reciprocal of a positive adjacent natural number of pole slot factor; the P-S coefficient ranges from 0.4 to 0.5 or 0.8 to 1; and a number of slots per pole and phase of the motor (100) is greater than or equal to 0.35 and less than or equal to 0.5;
**characterised in that** a quotient obtained by dividing the circumference of the largest circumference formed by the outer circumference of the rotor iron core (10) by the number of sector-shaped portions (14) and the radial length *l*_{PM} of the magnet (30) of the rotor iron core (10) is greater than or equal to 1 and less than or equal to 1.4.

2. The motor (100) according to claim 1, wherein a length of the rotor iron core (10) in the axial direction is greater than or equal to a length of the stator iron core (20) in an axial direction, for example, wherein a ratio of a length of the rotor iron core (10) to a length of the stator iron core (20) is greater than or equal to 1.0 and less than or equal to 1.25.

3. The motor (100) according to claim 2, wherein a first end surface of the rotor iron core (10) relatively protrudes from or aligns with a first end surface of the stator iron core (20), and a second end surface of the rotor iron core (10) relatively protrudes from a second end surface of the stator iron core (20).

4. The motor (100) according to claim 1, further comprising at least one end surface of the magnets (30) relatively protrudes from a corresponding end surface of the rotor iron core (10).

5. The motor according to claim 4, wherein a quotient obtained by dividing a difference between a length of each of the plurality of magnets (30) in the axial direction of the rotor iron core (10) and a length of the rotor iron core (10) in an axial direction by a length of the stator iron core (20) in the axial direction is greater than or equal to 0.15 and less than or equal to 0.45.

6. The motor (100) according to claim 4, wherein two end surfaces of the plurality of magnets (30) protrude asymmetrically in the axial direction with two end surfaces of the stator iron core (20), optionally, wherein a first length of each of the plurality of magnets (30) protruding from the first end surface of the stator iron core (20) is greater than or equal to 2 mm and less than or equal to 6 mm, and a second length of each of the plurality of magnets (30) protruding from the second end surface of the stator iron core (20) is greater than or equal to 4 mm and less than or equal to 8 mm.

7. The motor according to claim 1, further comprising an overmold (40); and the overmold (40) covers the plurality of magnets (30) and is formed on the end surface and the side surface of the rotor iron core (10); wherein the overmold (40) formed on one side surface of the rotor iron core (10) is provided with a debris adsorption groove (41, 32, 144).

8. The motor (100) according to claim 7, wherein the overmold (40) comprises: an end surface covering portion (42), covering the plurality of magnets (30) on the end surface of the rotor iron core (10), exposing the sector-shaped portion (14) of the end surface of the rotor iron core (10); a side filling portion (44), connecting to the end surface covering portion (42), covering the plurality of magnets (30) on the side surface of the rotor iron core (10), exposing the sector-shaped portion (14) on the side surface of the rotor iron core (10); the debris adsorption groove (41, 32, 144) formed in the side filling portion (44).

9. The motor according to claim 8, wherein an outer edge of the sector-shaped portion (14) away from the collar portion (12) protrudes toward the accommodating groove (16) to form a stopper (140), and the plurality of magnets (30) abut against the stopper (140); two opposing stoppers (140) between two adjacent sector-shaped portions (14) form a gap (142), and the side filling portion (44) is filled in the gap (142), or, wherein the end surface covering portion (42) comprises a plurality of magnet covering sub-portions (422) and a collar covering sub-portion (420), and the plurality of magnet covering sub-portions (422) are radially connected to the collar covering sub-portion (420); a retaining ring (426) is connected between the two adjacent magnet covering sub-portions (422), and the retaining ring (426) is arranged on the outer periphery of the sector-shaped portion (14), optionally, wherein a portion of the sector-shaped portion (14) exposed from the end surface covering portion (42) is provided with a balance hole (146), and the balance hole (146) is arranged in an area enclosed by the retaining ring (426), the plurality of magnet covering sub-portions (422) and the collar covering sub-portion (420).

10. The motor (100) according to claim 1, wherein a side of the sector-shaped portion (14) away from the collar portion (12) is provided with a debris adsorption groove (41, 32, 144), optionally, wherein an outer edge of the sector-shaped portion (14) away from the collar portion (12) protrudes toward the accommodating groove (16) to form a stopper (140); two opposing stoppers (140) between two adjacent sector-shaped portions (14) form a gap (142), a side of the sector-shaped portion (14) away from the collar portion (12) is provided with a debris adsorption groove (41, 32, 144).

11. The motor (100) according to claim 1, wherein the collar portion (12) has a shaft hole (120), the motor (100) further comprises a rotor shaft (50) and an overmold (40), and the rotor shaft (50) is inserted into the shaft hole (120); wherein, a diameter of the shaft hole (120) is larger than a shaft diameter of the rotor shaft (50), and the overmold (40) is filled between the rotor shaft (50) and the inner wall of the shaft hole (120).

12. The motor (100) according to claim 1, wherein the rotor iron core (10) comprises a first rotor punching group (11), a second rotor punching group (13) and a third rotor punching group (15) stacked in sequence; the first rotor punching group (11) and the third rotor punching group (15) are both formed by stacking a plurality of first rotor punching plates (110), and the first rotor punching plates (110) comprise a first ring plate (112) and a plurality of first sector-shaped plates (113) surrounding the first ring plates (112) and arranged at intervals, the plurality of first sector-shaped plates (113) in each of the first rotor punching plates (110) are all connected to the first ring plate (112); the second rotor punching group (13) is formed by stacking a plurality of second rotor punching plates (130), the second rotor punching plate (130) comprises a second ring plate (132) and a plurality of second sector-shaped plates (133) surrounding the second ring plate (132) and arranged at intervals, the connection and disconnection of the second sector-shaped plate (133) and the second ring plate (132) in each of the second rotor punching plates (130) are staggered to each other; wherein, the first ring plates (112) and the second ring plates (132) are stacked to form the collar portion (12), and the first sector-shaped plate (113) and the second sector-shaped plate (133) are stacked to form the sector-shaped portion (14).

13. The motor according to claim 12, wherein in the two adjacent stacked second rotor punching plates (130) arranged, the second sector-shaped plate (133) connected with the second ring plate (132) and the second sector-shaped plate (133) not connected with the second ring plate (132) are stacked, or, wherein a first limiting post (117) is formed on one side of the first ring plate (112) facing the first sector-shaped plate (113), and the first limiting post (117) is arranged between two adjacent first sector-shaped plates (113); a second limiting post (137) is formed on one side of the second ring plate (132) facing the second sector-shaped plate (133), and the second limiting post (137) is arranged between two adjacent second sector-shaped plates (133); the first limiting post (117) and the second limiting post (137) are stacked, and a length of the first limiting post (117) along a radial direction of the first ring plate (112) is greater than a length of the second limiting post (137) along a radial direction of the second ring plate (132).

14. The motor (100) according to claim 12, wherein the first sector-shaped plates (113) are all connected to the first ring plate (112) through a first connecting bridge (119); a second connecting bridge (135) and a breaking connecting bridge (136) are staggered in the second rotor punching plate (130), wherein one part of the second sector-shaped plate (133) is connected to the second ring plate (132) through the second connecting bridge (135), and the other part of the second sector-shaped plate (133) is spaced apart from the second ring plate (132) through the breaking connecting bridge (136); wherein, a ratio of a width of the first connecting bridge (119), the second connecting bridge (135) and the breaking connecting bridge (136) along the circumferential direction of the rotor iron core (10) to a thickness of the punching plate is 0.8 to 1.5, optionally, wherein a ratio of a length of the breaking connecting bridge (136) in the radial direction to a width of the breaking connecting bridge (136) in the circumferential direction is greater than or equal to a set value; wherein an uneven air gap is formed between the stator iron core (20) and the rotor iron core (10), the uneven air gap changes periodically along the outer circumference of the rotor iron core (10), and the set value is a quotient obtained by dividing a product of the minimum air gap of the uneven air gap and the number of the sector-shaped portions (14) by 1% of a perimeter of the largest circumference formed by the outer circumference of the rotor iron core (10), optionally, wherein a length of the breaking connecting bridge (136) in the radial direction is greater than or equal to 2.5 mm, widths of the first connecting bridge (119), the second connecting bridge (135) and the breaking connecting bridge (136) in the circumferential direction is greater than or equal to 0.3 mm and less than or equal to 1 mm.

15. The motor (100) according to claim 1, wherein the stator unit (22) comprises a yoke portion (220), a tooth portion (222) and a tooth shoulder (224), the tooth portion (222) is connected between the yoke portion (220) and the tooth shoulder (224), and a plurality of yoke portions (220) of the plurality of stator units (22) are connected in sequence, and there is a gap between two adjacent tooth shoulders (224), optionally, wherein one end of the yoke portions (220) are provided with a protrusion (227), and the other end of the yoke portions (220) are provided with a groove (228); the plurality of yoke portions (220) are sequentially engaged and connected through the protrusion (227) and the groove (228) , or wherein the inner surface of the yoke portion (220) is flat.

## Patentansprüche

1. Motor (100), der Folgendes umfasst: einen Rotoreisenkern (10), der Folgendes umfasst:
einen Kragenabschnitt (12), mehrere sektorförmige Abschnitte (14), die den Kragenabschnitt (12) umgeben und in Abständen angeordnet sind, und Aufnahmenuten (16), die zwischen je zwei benachbarten sektorförmigen Abschnitten (14) gebildet sind; mehrere Magnete (30), wobei die Magnete (30) jeweils in den entsprechenden Aufnahmenuten (16) eingebettet sind;
und einen auf den Rotoreisenkern (10) aufgeschobenen Statoreisenkern (20), der mehrere in einer Ringform eingeschlossene Statoreinheiten (22) umfasst; wobei ein Polschlitzfaktor des Motors (100) ein Absolutwert der Differenz zwischen einer Anzahl der Statoreinheiten (22) und einer Anzahl der sektorförmigen Abschnitte (14) ist und ein P-S-Koeffizient des Motors (100) eine Summe eines Kehrwerts des Polschlitzfaktors und eines Kehrwerts einer positiven benachbarten natürlichen Zahl des Polschlitzfaktors ist; der P-S-Koeffizient von 0,4 bis 0,5 oder 0,8 bis 1 reicht; und eine Anzahl von Schlitzen pro Pol und Phase des Motors (100) größer als oder gleich 0,35 und kleiner als oder gleich 0,5 ist;
**dadurch gekennzeichnet, dass** ein Quotient, der durch Dividieren des Umfangs des größten Umfangs, der von dem Außenumfang des Rotoreisenkerns (10) gebildet wird, durch die Anzahl sektorförmiger Abschnitte (14) und die Radiallänge *l*_{PM} des Magnets (30) des Rotoreisenkerns (10) erhalten wird, größer als oder gleich 1 und kleiner als oder gleich 1,4 ist.

2. Motor (100) nach Anspruch 1, wobei eine Länge des Rotoreisenkerns (10) in der Achsenrichtung größer als oder gleich einer Länge des Statoreisenkerns (20) in einer Achsenrichtung ist, wobei zum Beispiel ein Verhältnis einer Länge des Rotoreisenkerns (10) zu einer Länge des Statoreisenkerns (20) größer als oder gleich 1,0 und kleiner als oder gleich 1,25 ist.

3. Motor (100) nach Anspruch 2, wobei eine erste Endoberfläche des Rotoreisenkerns (10) von einer ersten Endoberfläche des Statoreisenkerns (20) relativ vorsteht oder zu dieser ausgerichtet ist und eine zweite Endoberfläche des Rotoreisenkerns (10) von einer zweiten Endoberfläche des Statoreisenkerns (20) relativ vorsteht.

4. Motor (100) nach Anspruch 1, der ferner mindestens eine Endoberfläche der Magnete (30) umfasst, die von einer entsprechenden Endoberfläche des Rotoreisenkerns (10) relativ vorsteht.

5. Motor nach Anspruch 4, wobei ein Quotient, der durch Dividieren einer Differenz zwischen einer Länge jedes der mehreren Magnete (30) in der Achsenrichtung des Rotoreisenkerns (10) und einer Länge des Rotoreisenkerns (10) in einer Achsenrichtung durch eine Länge des Statoreisenkerns (20) in der Achsenrichtung erhalten wird, größer als oder gleich 0,15 und kleiner als oder gleich 0,45 ist.

6. Motor (100) nach Anspruch 4, wobei zwei Endoberflächen der mehreren Magnete (30) in der Achsenrichtung asymmetrisch zu zwei Endoberflächen des Statoreisenkerns (20) vorstehen, wobei optional eine erste Länge jedes der mehreren Magnete (30), die von der ersten Endoberfläche des Statoreisenkerns (20) vorstehen, größer als oder gleich 2 mm und kleiner als oder gleich 6 mm ist und eine zweite Länge jedes der mehreren Magnete (30), die von der zweiten Endoberfläche des Statoreisenkerns (20) vorstehen, größer als oder gleich 4 mm und kleiner als oder gleich 8 mm ist.

7. Motor nach Anspruch 1, der ferner eine Umspritzung (40) umfasst; und die Umspritzung (40) die mehreren Magnete (30) abdeckt und auf der Endoberfläche und der Seitenoberfläche des Rotoreisenkerns (10) gebildet wird; wobei die auf einer Seitenoberfläche des Rotoreisenkerns (10) gebildete Umspritzung (40) mit einer Abriebteilchenadsorptionsnut (41, 32, 144) versehen ist.

8. Motor (100) nach Anspruch 7, wobei die Umspritzung (40) Folgendes umfasst: einen Endoberflächenabdeckabschnitt (42), der die mehreren Magnete (30) auf der Endoberfläche des Rotoreisenkerns (10) abdeckt, der den sektorförmigen Abschnitt (14) der Endoberfläche des Rotoreisenkerns (10) freilegt; einen Seitenfüllabschnitt (44), der mit dem Endoberflächenabdeckabschnitt (42) verbunden ist, die mehreren Magnete (30) auf der Seitenoberfläche des Rotoreisenkerns (10) abdeckt, den sektorförmigen Abschnitt (14) auf der Seitenoberfläche des Rotoreisenkerns (10) freilegt; wobei die Abriebteilchenadsorptionsnut (41, 32, 144) in dem Seitenfüllabschnitt (44) gebildet wird.

9. Motor nach Anspruch 8, wobei eine von dem Kragenabschnitt (12) entfernte Außenkante des sektorförmigen Abschnitts (14) zu der Aufnahmenut (16) hin vorsteht, um einen Anschlag (140) zu bilden, und die mehreren Magnete (30) an den Anschlag (140) stoßen; zwei gegenüberliegende Anschläge (140) zwischen zwei benachbarten sektorförmigen Abschnitten (14) einen Spalt (142) bilden und der Seitenfüllabschnitt (44) in dem Spalt (142) gefüllt ist, oder wobei der Endoberflächenabdeckabschnitt (42) mehrere Magnetabdeckunterabschnitte (422) und einen Kragenabdeckunterabschnitt (420) umfasst und die mehreren Magnetabdeckunterabschnitte (422) mit dem Kragenabdeckunterabschnitt (420) radial verbunden sind; ein Haltering (426) sich zwischen den zwei benachbarten Magnetabdeckunterabschnitten (422) befindet und mit diesen verbunden ist und der Haltering (426) auf dem äußeren Randbereich des sektorförmigen Abschnitts (14) angeordnet ist, wobei optional ein Abschnitt des sektorförmigen Abschnitts (14), der von dem Endoberflächenabdeckabschnitt (42) freigelegt ist, mit einer Ausgleichsbohrung (146) versehen ist und die Ausgleichsbohrung (146) in einem von dem Haltering (426), den mehreren Magnetabdeckunterabschnitten (422) und dem Kragenabdeckunterabschnitt (420) eingeschlossenen Bereich angeordnet ist.

10. Motor (100) nach Anspruch 1, wobei eine von dem Kragenabschnitt (12) entfernte Seite des sektorförmigen Abschnitts (14) mit einer Abriebteilchenadsorptionsnut (41, 32, 144) versehen ist, wobei optional eine von dem Kragenabschnitt (12) entfernte Außenkante des sektorförmigen Abschnitts (14) zu der Aufnahmenut (16) hin vorsteht, um einen Anschlag (140) zu bilden; zwei gegenüberliegende Anschläge (140) zwischen zwei benachbarten sektorförmigen Abschnitten (14) einen Spalt (142) bilden, eine von dem Kragenabschnitt (12) entfernte Seite des sektorförmigen Abschnitts (14) mit einer Abriebteilchenadsorptionsnut (41, 32, 144) versehen ist.

11. Motor (100) nach Anspruch 1, wobei der Kragenabschnitt (12) eine Wellenbohrung (120) aufweist, der Motor (100) ferner eine Rotorwelle (50) und eine Umspritzung (40) umfasst und die Rotorwelle (50) in die Wellenbohrung (120) eingeführt ist; wobei ein Durchmesser der Wellenbohrung (120) größer als ein Wellendurchmesser der Rotorwelle (50) ist und die Umspritzung (40) zwischen die Rotorwelle (50) und die Innenwand der Wellenbohrung (120) eingefüllt ist.

12. Motor (100) nach Anspruch 1, wobei der Rotoreisenkern (10) eine erste Rotorstanzgruppe (11), eine zweite Rotorstanzgruppe (13) und eine dritte Rotorstanzgruppe (15), die aufeinanderfolgend gestapelt sind, umfasst; sowohl die erste Rotorstanzgruppe (11) als auch die dritte Rotorstanzgruppe (15) durch Stapeln mehrerer erster Rotorstanzplatten (110) gebildet werden und die ersten Rotorstanzplatten (110) eine erste Ringplatte (112) und mehrere erste sektorförmige Platten (113), die die ersten Ringplatten (112) umgeben und in Abständen angeordnet sind, umfassen, die mehreren ersten sektorförmigen Platten (113) in jeder der ersten Rotorstanzplatten (110) alle mit der ersten Ringplatte (112) verbunden sind; die zweite Rotorstanzgruppe (13) durch Stapeln mehrerer zweiter Rotorstanzplatten (130) gebildet wird, die zweite Rotorstanzplatte (130) eine zweite Ringplatte (132) und mehrere zweite sektorförmige Platten (133), die die zweite Ringplatte (132) umgeben und in Abständen angeordnet sind, umfasst, die Verbindung und das Lösen der Verbindung der zweiten sektorförmigen Platte (133) und der zweiten Ringplatte (132) in jeder der zweiten Rotorstanzplatten (130) zueinander versetzt sind; wobei die ersten Ringplatten (112) und die zweiten Ringplatten (132) gestapelt sind, um den Kragenabschnitt (12) zu bilden, und die erste sektorförmige Platte (113) und die zweite sektorförmige Platte (133) gestapelt sind, um den sektorförmigen Abschnitt (14) zu bilden.

13. Motor nach Anspruch 12, wobei in den zwei benachbarten gestapelten zweiten Rotorstanzplatten (130), die angeordnet sind, die zweite sektorförmige Platte (133), die mit der zweiten Ringplatte (132) verbunden ist, und die zweite sektorförmige Platte (133), die nicht mit der zweiten Ringplatte (132) verbunden ist, gestapelt sind oder wobei ein erster Begrenzungsvorsprung (117) auf einer der ersten sektorförmigen Platte (113) zugewandten Seite der ersten Ringplatte (112) gebildet wird und der erste Begrenzungsvorsprung (117) zwischen zwei benachbarten ersten sektorförmigen Platten (113) angeordnet ist; ein zweiter Begrenzungsvorsprung (137) auf einer der zweiten sektorförmigen Platte (133) zugewandten Seite der zweiten Ringplatte (132) gebildet wird und der zweite Begrenzungsvorsprung (137) zwischen zwei benachbarten zweiten sektorförmigen Platten (133) angeordnet ist; der erste Begrenzungsvorsprung (117) und der zweite Begrenzungsvorsprung (137) gestapelt sind und eine Länge des ersten Begrenzungsvorsprungs (117) entlang einer Radialrichtung der ersten Ringplatte (112) größer als eine Länge des zweiten Begrenzungsvorsprungs (137) entlang einer Radialrichtung der zweiten Ringplatte (132) ist.

14. Motor (100) nach Anspruch 12, wobei die ersten sektorförmigen Platten (113) alle durch eine erste Verbindungsbrücke (119) mit der ersten Ringplatte (112) verbunden sind; eine zweite Verbindungsbrücke (135) und eine unterbrochene Verbindungsbrücke (136) in der zweiten Rotorstanzplatte (130) versetzt sind, wobei ein Teil der zweiten sektorförmigen Platte (133) durch die zweite Verbindungsbrücke (135) mit der zweiten Ringplatte (132) verbunden ist und der andere Teil der zweiten sektorförmigen Platte (133) durch die unterbrochene Verbindungsbrücke (136) von der zweiten Ringplatte (132) beabstandet ist; wobei ein Verhältnis einer Breite der ersten Verbindungsbrücke (119), der zweiten Verbindungsbrücke (135) und der unterbrochenen Verbindungsbrücke (136) entlang der Umfangsrichtung des Rotoreisenkerns (10) zu einer Dicke der Stanzplatte 0,8 bis 1,5 ist, wobei optional ein Verhältnis einer Länge der unterbrochenen Verbindungsbrücke (136) in der Radialrichtung zu einer Breite der unterbrochenen Verbindungsbrücke (136) in der Umfangsrichtung größer als oder gleich einem Sollwert ist; wobei zwischen dem Statoreisenkern (20) und dem Rotoreisenkern (10) ein ungleichmäßiger Luftspalt gebildet wird, wobei sich der ungleichmäßige Luftspalt entlang des Außenumfangs des Rotoreisenkerns (10) periodisch ändert, und der Sollwert ein Quotient ist, der durch Dividieren eines Produkts des Mindestluftspalts des ungleichmäßigen Luftspalts und der Anzahl der sektorförmigen Abschnitte (14) durch 1 % einer Begrenzungslinienlänge des größten Umfangs, der von dem Außenumfang des Rotoreisenkerns (10) gebildet wird, erhalten wird, wobei optional eine Länge der unterbrochenen Verbindungsbrücke (136) in der Radialrichtung größer als oder gleich 2,5 mm ist, Breiten der ersten Verbindungsbrücke (119), der zweiten Verbindungsbrücke (135) und der unterbrochenen Verbindungsbrücke (136) in der Umfangsrichtung größer als oder gleich 0,3 mm und kleiner als oder gleich 1 mm sind.

15. Motor (100) nach Anspruch 1, wobei die Statoreinheit (22) einen Jochabschnitt (220), einen Zahnabschnitt (222) und eine Zahnschulter (224) umfasst, der Zahnabschnitt (222) sich zwischen dem Jochabschnitt (220) und der Zahnschulter (224) befindet und mit diesen verbunden ist und mehrere Jochabschnitte (220) der mehreren Statoreinheiten (22) aufeinanderfolgend verbunden sind und zwischen zwei benachbarten Zahnschultern (224) ein Spalt ist, wobei optional ein Ende der Jochabschnitte (220) mit einem Überstand (227) versehen ist und das andere Ende der Jochabschnitte (220) mit einer Nut (228) versehen ist; die mehreren Jochabschnitte (220) durch den Überstand (227) und die Nut (228) sequenziell in Eingriff gebracht und verbunden werden oder wobei die Innenoberfläche des Jochabschnitts (220) eben ist.

## Revendications

1. Moteur (100), comprenant : un noyau de fer rotorique (10), comprenant : une partie de collier (12), une pluralité de parties en forme de secteur (14) entourant la partie de collier (12) et disposées à intervalles, et des rainures réceptrices (16) formées entre chaque deux parties en forme de secteur (14) adjacentes ; une pluralité d'aimants (30), dans lequel les aimants (30) sont insérés respectivement dans les rainures réceptrices correspondantes (16) ; et un noyau de fer statorique (20) emmanché sur le noyau de fer rotorique (10), comprenant une pluralité d'unités statoriques (22) enfermées en forme d'anneau ; dans lequel un facteur d'encoches par pole du moteur (100) est une valeur absolue de la différence entre un nombre des unités statoriques (22) et un nombre des parties en forme de secteur (14), et un coefficient P-S du moteur (100) est une somme d'un réciproque du facteur d'encoches par pole et d'un réciproque d'un nombre naturel adjacent positif de facteur d'encoches par pole ; le coefficient P-S varie de 0,4 à 0,5 ou de 0,8 à 1 ; et un nombre d'encoches par pôle et phase du moteur (100) est supérieur ou égal à 0,35 et inférieur à ou égal à 0,5 ;
**caractérisé en ce qu'**un quotient obtenu en divisant la circonférence de la plus grande circonférence formée par la circonférence externe du noyau de fer rotorique (10) par le nombre de parties en forme de secteur (14) et la longueur radiale *l*_{PM} de l'aimant (30) du noyau de fer rotorique (10) est supérieur ou égal à 1 et inférieur ou égal à 1,4.

2. Moteur (100) selon la revendication 1, dans lequel une longueur du noyau de fer rotorique (10) dans la direction axiale est supérieure ou égale à une longueur du noyau de fer statorique (20) dans une direction axiale, par exemple, dans lequel un rapport d'une longueur du noyau de fer rotorique (10) sur une longueur du noyau de fer statorique (20) est supérieur ou égal à 1,0 et inférieur ou égal à 1,25.

3. Moteur (100) selon la revendication 2, dans lequel une première surface d'extrémité du noyau de fer rotorique (10) dépasse d'une première surface d'extrémité du noyau de fer statorique (20) ou s'aligne relativement avec celle-ci, et une seconde surface d'extrémité du noyau de fer rotorique (10) dépasse relativement d'une seconde surface d'extrémité du noyau de fer statorique (20).

4. Moteur (100) selon la revendication 1, comprenant en outre au moins une surface d'extrémité des aimants (30) qui dépasse relativement d'une surface d'extrémité correspondante du noyau de fer rotorique (10).

5. Moteur selon la revendication 4, dans lequel un quotient obtenu en divisant une différence entre une longueur de chacun de la pluralité d'aimants (30) dans la direction axiale du noyau de fer rotorique (10) et une longueur du noyau de fer rotorique (10) dans une direction axiale par une longueur du noyau de fer statorique (20) dans la direction axiale est supérieur ou égal à 0,15 et inférieur ou égal à 0,45.

6. Moteur (100) selon la revendication 4, dans lequel deux surfaces d'extrémité de la pluralité d'aimants (30) dépassent asymétriquement dans la direction axiale avec deux surfaces d'extrémité du noyau de fer statorique (20), éventuellement, dans lequel une première longueur de chacun de la pluralité d'aimants (30) dépassant de la première surface d'extrémité du noyau de fer statorique (20) est supérieure ou égale à 2 mm et inférieur ou égal à 6 mm, et une seconde longueur de chacun de la pluralité d'aimants (30) dépassant de la seconde surface d'extrémité du noyau de fer statorique (20) est supérieure ou égale à 4 mm et inférieure ou égale à 8 mm.

7. Moteur selon la revendication 1, comprenant en outre un surmoule (40) ; et le surmoule (40) couvre la pluralité d'aimants (30) et est formé sur la surface d'extrémité et la surface latérale du noyau de fer rotorique (10) ; dans lequel le surmoule (40) formé sur une surface latérale du noyau de fer rotorique (10) est doté d'une rainure d'adsorption de débris (41, 32, 144).

8. Moteur (100) selon la revendication 7, dans lequel le surmoule (40) comprend : une partie de revêtement de surface d'extrémité (42), laquelle recouvre la pluralité d'aimants (30) sur la surface d'extrémité du noyau de fer rotorique (10), expose la partie en forme de secteur (14) de la surface d'extrémité du noyau de fer rotorique (10) ; une partie de remplissage latérale (44), qui se connecte à la partie de revêtement de surface d'extrémité (42), recouvre la pluralité d'aimants (30) sur la surface latérale du noyau de fer rotorique (10), expose la partie en forme de secteur (14) sur la surface latérale du noyau de fer rotorique (10) ; la rainure d'adsorption de débris (41, 32, 144) étant formée dans la partie de remplissage latérale (44).

9. Moteur selon la revendication 8, dans lequel un bord externe de la partie en forme de secteur (14) éloigné de la partie de collier (12) dépasse vers la rainure réceptrice (16) pour former une butée (140), et la pluralité d'aimants (30) butte contre la butée (140) ; deux butées opposées (140) entre deux parties en forme de secteur (14) adjacentes forment un espace (142), et la partie de remplissage latérale (44) est remplie dans l'espace (142), ou, dans lequel la partie de revêtement de surface d'extrémité (42) comprend une pluralité de sous-parties de revêtement d'aimants (422) et une sous-partie de revêtement de collier (420), et la pluralité de sous-parties de revêtement d'aimants (422) est connectée radialement à la sous-partie de revêtement de collier (420) ; un anneau de retenue (426) est connecté entre les deux sous-parties de revêtement d'aimants (422) adjacentes, et l'anneau de retenue (426) est disposé sur la périphérie externe de la partie en forme de secteur (14), éventuellement, dans lequel une partie de la partie en forme de secteur (14) exposée à partir de la partie de revêtement de surface d'extrémité (42) est dotée d'un trou d'équilibrage (146), et le trou d'équilibrage (146) est disposé dans une zone ceinte par l'anneau de retenue (426), la pluralité de sous-parties de revêtement d'aimants (422) et la sous-partie de revêtement de collier (420).

10. Moteur (100) selon la revendication 1, dans lequel un côté de la partie en forme de secteur (14) éloigné de la partie de collier (12) est doté d'une rainure d'adsorption de débris (41, 32, 144), éventuellement, dans lequel un bord externe de la partie en forme de secteur (14) éloignée de la partie de collier (12) dépasse vers la rainure réceptrice (16) pour former une butée (140) ; deux butées opposées (140) entre deux parties en forme de secteur (14) adjacentes forment un espace (142), un côté de la partie en forme de secteur (14) éloigné de la partie de collier (12) est doté d'une rainure d'adsorption de débris (41, 32, 144).

11. Moteur (100) selon la revendication 1, dans lequel la partie de collier (12) présente un trou d'arbre (120), le moteur (100) comprend en outre un arbre de rotor (50) et un surmoule (40), et l'arbre de rotor (50) est inséré dans le trou d'arbre (120) ; dans lequel un diamètre du trou d'arbre (120) est plus grand qu'un diamètre d'arbre de l'arbre de rotor (50), et le surmoule (40) est rempli entre l'arbre de rotor (50) et la paroi interne du trou d'arbre (120).

12. Moteur (100) selon la revendication 1, dans lequel le noyau de fer rotorique (10) comprend un premier groupe de tôles de rotor (11), un deuxième groupe de tôles de rotor (13) et un troisième groupe de tôles de rotor (15) empilées séquentiellement ; le premier groupe de tôles de rotor (11) et le troisième groupe de tôles de rotor (15) sont tous deux formés en empilant une pluralité de premières plaques de tôles de rotor (110), et les premières plaques de tôles de rotor (110) comprennent une première plaque annulaire (112) et une pluralité de premières plaques en forme de secteur (113) entourant les premières plaques annulaires (112) et disposées à des intervalles, la pluralité de premières plaques en forme de secteur (113) dans chacune des premières plaques de tôles de rotor (110) est connectée à la première plaque annulaire (112) ; le deuxième groupe de tôles de rotor (13) est formé en empilant une pluralité de secondes plaques de tôles de rotor (130), la seconde plaque de tôles de rotor (130) comprend une seconde plaque annulaire (132) et une pluralité de secondes plaques en forme de secteur (133) entourant la seconde plaque annulaire (132) et disposées à des intervalles, la connexion et la déconnexion de la seconde plaque en forme de secteur (133) et de la seconde plaque annulaire (132) dans chacune des secondes plaques de tôles de rotor (130) sont décalées l'une par rapport à l'autre ; dans lequel les premières plaques annulaires (112) et les secondes plaques annulaires (132) sont empilées pour former la partie de collier (12), et la première plaque en forme de secteur (113) et la seconde plaque en forme de secteur (133) sont empilées pour former la partie en forme de secteur (14).

13. Moteur selon la revendication 12, dans lequel dans les deux secondes plaques de tôles de rotor (130) empilées adjacentes disposées, la seconde plaque en forme de secteur (133) connectée à la seconde plaque annulaire (132) et la seconde plaque en forme de secteur (133) non connectée à la seconde plaque annulaire (132) sont empilées, ou, dans lequel un premier montant limiteur (117) est formé sur un côté de la première plaque annulaire (112) faisant face à la première plaque en forme de secteur (113), et le premier montant limiteur (117) est disposé entre deux plaques en forme de premier secteur (113) adjacentes ; un second montant limiteur (137) est formé sur un côté de la seconde plaque annulaire (132) faisant face à la seconde plaque en forme de secteur (133), et le second montant limiteur (137) est disposé entre deux secondes plaques en forme de secteur (133) adjacentes ; le premier montant limiteur (117) et le second montant limiteur (137) sont empilés, et une longueur du premier montant limiteur (117) le long d'une direction radiale de la première plaque annulaire (112) est supérieure à une longueur du second montant limiteur (137) le long d'une direction radiale de la seconde plaque annulaire (132).

14. Moteur (100) selon la revendication 12, dans lequel les premières plaques en forme de secteur (113) sont toutes connectées à la première plaque annulaire (112) par le biais d'un premier pont de connexion (119) ; un second pont de connexion (135) et un pont de connexion de rupture (136) sont décalés dans la seconde plaque de tôles de rotor (130), dans lequel une partie de la seconde plaque en forme de secteur (133) est connectée à la seconde plaque annulaire (132) par le biais du second pont de connexion (135), et l'autre partie de la seconde plaque en forme de secteur (133) est espacée de la seconde plaque annulaire (132) par le biais du pont de connexion de rupture (136) ; dans lequel un rapport d'une largeur du premier pont de connexion (119), du second pont de connexion (135) et du pont de connexion de rupture (136) le long de la direction circonférentielle du noyau de fer rotorique (10) sur une épaisseur de la plaque de tôles est de 0,8 à 1,5, éventuellement, dans lequel un rapport d'une longueur du pont de connexion de rupture (136) dans la direction radiale sur une largeur du pont de connexion de rupture (136) dans la direction circonférentielle est supérieur ou égal à une valeur de consigne ; dans lequel un écart d'air irrégulier est formé entre le noyau de fer statorique (20) et le noyau de fer rotorique (10), l'écart d'air irrégulier varie périodiquement le long de la circonférence externe du noyau de fer rotorique (10), et la valeur de consigne est un quotient obtenu en divisant un produit de l'écart d'air minimum de l'écart d'air irrégulier et du nombre de parties en forme de secteur (14) par environ 1 % d'un périmètre de la plus grande circonférence formée par la circonférence externe du noyau de fer rotorique (10), éventuellement, dans lequel une longueur du pont de connexion de rupture (136) dans la direction radiale est supérieure ou égale à 2,5 mm, des largeurs du premier pont de connexion (119), du seconde pont de connexion (135) et du pont de connexion à rupture (136) dans la direction circonférentielle sont supérieures ou égales à 0,3 mm et inférieures ou égales à 1 mm.

15. Moteur (100) selon la revendication 1, dans lequel l'unité statorique (22) comprend une partie d'étrier (220), une partie de dent (222) et un épaulement de dent (224), la partie de dent (222) est connectée entre la partie d'étrier (220) et l'épaulement de dent (224), et une pluralité de parties d'étrier (220) de la pluralité d'unités statoriques (22) est connectée en séquence, et un espace existe entre deux épaulements de dents adjacents (224), éventuellement, dans lequel une extrémité des parties d'étrier (220) est dotée d'une protubérance (227), et l'autre extrémité des parties d'étrier (220) est dotée d'une rainure (228) ; la pluralité de parties d'étrier (220) est enclenchée séquentiellement et connectée à travers la protubérance (227) et la rainure (228), ou dans lequel la surface interne de la partie d'étrier (220) est plate.
